# EUROPEAN PATENT SPECIFICATION

(11) **EP 4 228 051 B1**
(45) Date of publication and mention of the grant of the patent: **09.12.2026**
(21) Application number: 21897599.3
(22) Date of filing: 28.10.2021
(51) Int. Cl.: H01M 10/06, H01M 4/14, H01M 4/62, H01M 4/02, H01M 10/12, H01M 10/08

(54) **LEAD-ACID BATTERY**
BLEI-BATTERIE
BATTERIE AU PLOMB-ACIDE

(30) Priority: 27.11.2020 JP 2020197584
(43) Date of publication of application: 16.08.2023
(73) Proprietor: GS Yuasa International Ltd., Kisshoin, Minami-ku, Kyoto-shi, Kyoto 601-8520 (JP)
(72) Inventor: HAMANO Yasuyuki, Kyoto-shi, Kyoto 601-8520 (JP)
(74) Representative: Isarpatent
(86) International application number: PCT/JP2021/039743
(87) International publication number: WO 2022/113623

(56) References cited:
- EP-A1- 3 252 863
- EP-A1- 3 683 885
- EP-B1- 3 384 543
- JP-A- 2015 032 481
- JP-A- 2017 079 166
- JP-A- 2020 115 424
- JP-A- H09 147 869
- JP-A- S60 182 662
- US-A1- 2016 240 857

## Description

### TECHNICAL FIELD

The present invention relates to a lead-acid battery.

### BACKGROUND ART

Lead-acid batteries are in use for various applications, including automotive and industrial applications. The lead-acid batteries include a negative electrode plate, a positive electrode plate, a separator (or mat), an electrolyte solution, and the like. An additive may be added to constituent members of the lead-acid battery from the viewpoint of imparting various functions.

Patent Document 1 discloses a flooded-type lead-acid battery structured to store an element, obtained by stacking a negative electrode plate, formed by filling a negative current collector with a negative active material, and a positive electrode plate, formed by filling a positive current collector with a positive active material, via a separator, in a container with an electrolyte solution, and in this lead-acid battery, intermittent charge is performed, and high rate discharge to the load is performed under partial state of charge. Patent Document 1 proposes the lead-acid battery characterized in that at least a carbonaceous conductive material and an organic compound suppressing coarsening of the negative active material accompanied by charge and discharge are added to the negative active material, the positive electrode plate is configured to set a positive active material total surface area [m²] per unit element volume [cm³] to be in a range between 3.5 and 15.6 [m²/cm³], and compound(s) chosen from among a cationic coagulant, a cationic surfactant, and a phosphoric acid are added to the electrolyte solution.

Patent Document 2 proposes an electrolyte solution for a lead-acid battery containing an ammonium compound represented by a specific formula (I).

Patent Document 3 proposes a lead-acid battery in which a copolymer of propylene oxide and ethylene oxide was added to a negative electrode plate and a substance in combination with lignin sulfonate.

Patent Document 4 proposes a rechargeable electrochemical cell subjected to multiple charge and discharge cycles. Each charge cycle includes a charging portion corresponding to gassing charge in which gas is generated in the cell and a charging portion lower than the gassing charge. The electrochemical cell includes a positive electrode, a negative electrode, a water-soluble electrolyte solution in ionic contact with the electrode that supports current between the electrodes, and its components coupled to the negative electrode and used for forming an inactivatable inhibiting means and a barrier inhibiting the gassing charge, which are arranged in the electrolyte solution. When activated, the inactivatable inhibiting means is activated by the charging portion corresponding to the gassing charge such that the inactivatable inhibiting means inhibits the gassing charge and limits gas generation in the cell, while when inactivated, the inactivatable inhibiting means has substantially no effect of limiting the charge, and the inactivatable inhibiting means is inactivated by the charging portion lower than the gassing charge such that the inactivatable inhibiting means has substantially no effect during a discharge cycle. Patent Document 4 describes quaternary ammonium such as alkyldimethylbenzylammonium chloride as the inactivatable inhibiting means.

Patent Document 5 proposes a lead-acid battery including a negative electrode material containing carbon, a bisphenol-based condensate, at least one of alginic acid and a salt thereof, and spongy lead, a positive electrode material containing lead dioxide as a main component, and an electrolyte solution containing at least one element of aluminum ions, lithium ions, and sodium ions.

Patent Document 6 mainly proposes a polymer nanopolymer electrolyte for a lead-acid battery in which 2.5 to 4% by weight of a ligand, 2.5 to 4% by weight of a complexing agent, 0.01 to 0.5% by weight of a catalyst, 2.3 to 3.8% by weight of a stabilizer, 0.1 to 0.5% by weight of a modifier, 0.01 to 0.5% by weight of an antifoaming agent, 36 to 45% by weight of sulfuric acid, and a balance of water are mixed. Here, the complexing agent is sodium carboxymethylcellulose or polyacrylamide, the stabilizer is lithium sulfate or an alkali containing lithium ions, the antifoaming agent is glycerin polyoxyethylene polyoxypropylene ether or tributyl phosphate, the modifier is sodium hydroxide or potassium hydroxide, or sodium carbonate, the ligand is nanofumed silica having a diameter of 8 to 15 nm, and the catalyst is sodium amide or sodium metal 99.5.

Patent Document 7 proposes a lead-acid battery including a combination of a positive electrode plate formed by filling a porous substrate made of a Pb-Ca-based alloy with a positive active material containing calcium and an electrolyte solution containing aluminum ions.

Patent Document 8 discloses a lead storage battery comprising a electrolytic solution containing at least one selected from the group consisting of a potassium ion, an aluminum ion, a cesium ion and a phosphate ion. Patent Document 9 describes a lead-acid battery including a negative electrode material containing graphite or carbon fiber. Patent Document 10 discloses a lead-acid battery comprising a negative electrode material comprising an aromatic ester compound. Patent Document 11 describes a lead-acid battery comprising an electrolyte solution containing aluminum ions.

### PRIOR ART DOCUMENTS

### PATENT DOCUMENTS

Patent Document 1: WO 2013/058058 A
Patent Document 2: JP-A-2008-152973
Patent Document 3: JP-A-60-182662
Patent Document 4: US-A-6899978
Patent Document 5: JP-A-2015-32481
Patent Document 6: CN-B-100439438
Patent Document 7: JP-A-2006-4636
Patent Document 8: EP 3 252 863 A1
Patent Document 9: US 2016/240857 A1
Patent Document 10: EP 3 384 543 B1
Patent Document 11: EP 3 683 885 A1

### SUMMARY OF THE INVENTION

### PROBLEMS TO BE SOLVED BY THE INVENTION

The lead-acid battery is sometimes used in a poor charged state called partial state of charge (PSOC). For example, lead-acid batteries mounted on idling stop start (ISS) vehicles are used in the PSOC. When the lead-acid battery is repeatedly charged and discharged in the PSOC, lead sulfate is likely to accumulate, and the life performance is likely to deteriorate. In order to suppress accumulation of lead sulfate, high charge acceptability is required. However, when the charge acceptability is high, the reductive reaction of hydrogen ions during overcharge also becomes remarkable, so that the amount of overcharge increases and a decrease of the electrolyte solution becomes remarkable. When a surface of lead contained in a negative electrode material is covered with an organic additive, the reductive reaction of hydrogen ions hardly occurs during overcharge, and therefore, the amount of overcharge can be reduced. However, when the lead surface is covered with the organic additive, lead sulfate generated during discharge is hardly eluted during charge, so that the charge acceptability is deteriorated. Thus, it is difficult to achieve both suppression of deterioration of the charge acceptability and reduction in the amount of overcharge.

### MEANS FOR SOLVING THE PROBLEMS

One aspect of the present invention is a lead-acid battery, and the lead-acid battery includes at least one cell including an element and an electrolyte solution,
in which the element includes a positive electrode plate, a negative electrode plate, and a separator interposed between the negative electrode plate and the positive electrode plate,
the negative electrode plate includes a negative electrode material,
the negative electrode material contains an organic expander and at least one additive selected from the group consisting of a cationic surfactant and a polymer compound having a repeating structure of an oxy C₂₋₄ alkylene unit,
the electrolyte solution contains metal ions,
the metal ion contains at least one component selected from the group consisting of a lithium ion, a sodium ion, and an aluminum ion,
a total concentration of the component in the electrolyte solution is 0.02 mol/L or more, and
the concentration of each of the components in the electrolyte solution is 0.35 mol/L or less.

### BRIEF DESCRIPTION OF THE DRAWINGS

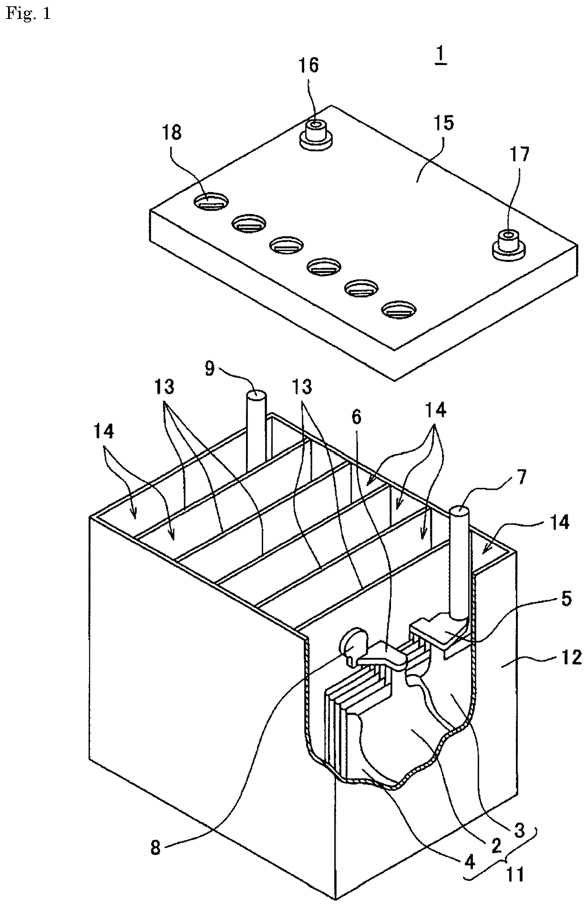

Fig. 1 is a partially cutaway exploded perspective view showing an appearance and an internal structure of a lead-acid battery according to one aspect of the present invention.

### MODE FOR CARRYING OUT THE INVENTION

In general, in the lead-acid battery, the reaction during overcharge is greatly affected by a reductive reaction of hydrogen ions at an interface between lead and an electrolyte solution. When an organic additive is contained in a negative electrode material of the lead-acid battery, the organic additive adheres to the surface of lead as an active material. When the lead surface is covered with the organic additive, the reductive reaction of hydrogen ions hardly occurs, and therefore, an amount of overcharge tends to decrease. However, the organic additive also adheres to the surface of lead sulfate generated during discharge, and lead sulfate is hardly eluted during charge, thereby deteriorating the charge acceptability. Therefore, suppression of deterioration of the charge acceptability and reduction in the amount of overcharge are in a trade-off relationship, and it has been conventionally difficult to achieve both simultaneously. In addition, when the organic additive is unevenly distributed in lead pores, it is necessary to increase a content of the organic additive in the negative electrode material in order to secure a sufficient effect of reducing the amount of overcharge. However, in general, when the content of the organic additive is increased, the charge acceptability is deteriorated.

In the lead-acid battery, in general, since a sulfuric acid aqueous solution is used as an electrolyte solution, when an organic additive (oil, polymer, organic expander, or the like) is contained in a negative electrode material, it becomes difficult to balance elution into the electrolyte solution and adsorption to lead. For example, when an organic additive having low adsorptivity to lead is used, elution into the electrolyte solution becomes easy, so that the amount of overcharge is hardly reduced. On the other hand, when an organic additive having high adsorptivity to lead is used, it is difficult to thinly adhere the organic additive to the lead surface, and the organic additive tends to be unevenly distributed in the lead pores.

When the organic additive is unevenly distributed in the lead pores, movement of ions (such as lead ions and sulfate ions) is inhibited by steric hindrance of the unevenly distributed organic additive. Thus, the charge-discharge reaction is likely to be inhibited. When the content of the organic additive is increased in order to secure a sufficient effect of reducing the amount of overcharge, movement of ions in the pores is further inhibited, so that the charge-discharge reaction is further inhibited. When the charge-discharge reaction is inhibited, the charge acceptability is deteriorated or discharge performance is deteriorated.

In view of the above, a lead-acid battery according to one aspect of the present invention includes at least one cell including an element and an electrolyte solution. The element includes a positive electrode plate, a negative electrode plate, and a separator interposed between the positive electrode plate and the negative electrode plate. The negative electrode plate includes a negative electrode material. The negative electrode material contains at least one additive (hereinafter, referred to as a first additive) selected from the group consisting of a cationic surfactant and a polymer compound having a repeating structure of an oxy C₂₋₄ alkylene unit, and an organic expander. The electrolyte solution contains metal ions. The metal ion includes at least one component (hereinafter, referred to as a first component) selected from the group consisting of a lithium ion, a sodium ion, and an aluminum ion. The total concentration of the first component in the electrolyte solution is 0.02 mol/L or more. The concentration of each of the first components in the electrolyte solution is 0.35 mol/L or less.

According to the lead-acid battery according to one aspect of the present invention, by combining a negative electrode plate including a negative electrode material containing an organic expander and a first additive and an electrolyte solution containing a first component at the above concentration, it is possible to reduce the amount of overcharge while securing high charge acceptability. Suppression of hydrogen generation during overcharge can reduce the amount of decrease in the electrolyte solution. It is also possible to remarkably improve life performance in the case of repeating charge-discharge in a PSOC cycle (hereinafter, the life performance is referred to as PSOC life performance).

In the lead-acid battery according to one aspect of the present invention, it is considered that the amount of overcharge can be reduced while securing relatively high charge acceptability for the following reasons.

First, the first additive has high adsorptivity to lead due to the repeating structure of the oxy C₂₋₄ alkylene unit or the presence of the hydrophilic group of the surfactant. In the lead-acid battery, hydrogen sulfate ions are adsorbed on the lead surface in the negative electrode material; however, anionicity of the hydrogen sulfate ions is relaxed by the action of the first component. This effect is considered to be more remarkable when the first additive has a hydrophobic group. Thus, it is considered that the adsorptivity of the first additive to the lead surface is further enhanced. When the first additive has the repeating structure of the oxy C₂₋₄ alkylene unit, the first additive easily takes a linear structure. It is considered that the surfactant can suppress excessive coating on the lead surface by the action of the hydrophobic group, and is amphiphilic, so that aggregation hardly occurs. Thus, a wide region of the lead surface is thinly and widely covered with the first additive. As a result, a hydrogen overvoltage increases, and a side reaction in which hydrogen is generated during overcharge hardly occurs, so that the amount of overcharge can be reduced. Since the effect of reducing the amount of overcharge is obtained even when the negative electrode material contains a very small amount of the first additive, it is considered that when the first additive is contained in the negative electrode material, the first additive can be present near lead, whereby a high adsorption action of the first additive on lead is exerted.

The effect of reducing the amount of overcharge is exhibited by covering the surface of lead in the negative electrode material with the first additive. Thus, it is important that the first additive is present near lead in the negative electrode material, whereby the effect of the first additive can be effectively exhibited. Thus, it is important that the negative electrode material contains the first additive regardless of whether or not a component of the lead-acid battery other than the negative electrode material contains the first additive.

When the negative electrode material contains the organic additive, the organic additive adheres not only to the lead surface but also to the surface of lead sulfate generated during discharge, and therefore, solubility of lead sulfate during charge tends to decrease. However, since a thickness of a coating film of the first additive covering the surfaces of lead and lead sulfate is thin, a degree to which dissolution of lead sulfate and transfer of electrons occurring when lead ions are reduced to lead are inhibited by the coating film of the first additive during charge is reduced. Since the coating film of the first additive is thin and uneven distribution is suppressed, steric hindrance due to the coating film of the first additive is reduced, and therefore, hindrance of movement of lead ions in pores of the negative electrode material is reduced. Thus, a high diffusion rate of lead ions is maintained. As a result, even when the negative electrode material contains the first additive and the organic expander which are the organic additives, the inhibition of the charge-discharge reaction can be reduced. Since the electrolyte solution contains the first component in a specific content, crystal growth of lead sulfate in the negative electrode plate during discharge hardly proceeds, and therefore, coarsening of lead sulfate is suppressed. In addition, it is considered that since the electrolyte solution contains the first component, the adsorptivity of the first additive to the surface of lead sulfate decreases due to the presence of the first component present near lead sulfate. As a result, the coating of lead sulfate with the first additive is further reduced. As described above, it is considered that a high diffusion rate of lead ions can be secured, coarsening of lead sulfate can be suppressed, and in addition, excessive coating of lead sulfate with the first additive is suppressed, so that high charge acceptability can be secured.

As described above, in the lead-acid battery according to one aspect of the present invention, coarsening of lead sulfate is suppressed, and high charge acceptability is obtained. As a result, even when charge-discharge is repeated in the PSOC cycle, the accumulation of lead sulfate is reduced, and progress of sulfation in which the accumulated lead sulfate is inactivated can be suppressed. Thus, high PSOC life performance can be secured.

On the other hand, even when the electrolyte solution contains a specific concentration of the first component, when the negative electrode material contains an organic expander and does not contain the first additive, it is possible to secure high charge acceptability and PSOC life performance to some extent. However, the effect of reducing the amount of overcharge cannot be obtained. Even when the negative electrode material contains the organic expander and the first additive, when the electrolyte solution does not contain the first component, the amount of overcharge can be reduced to some extent; however, the charge acceptability is reduced, and the PSOC life performance is hardly changed or reduced. In contrast to these results, in the lead-acid battery according to one aspect of the present invention, by combining the negative electrode plate including the negative electrode material containing the organic expander and the first additive and the electrolyte solution containing the first component at a specific concentration, it is possible to greatly improve the charge acceptability while reducing the amount of overcharge as described above. In addition, the PSOC life performance can be significantly improved. Each of these effects is superior to that expected from each of the case of combining the electrolyte solution containing a specific concentration of the first component with the negative electrode plate including the negative electrode material containing the organic expander and not containing the first additive, and the case of combining the negative electrode material containing the organic expander and the first additive with the electrolyte solution not containing the first component. That is, in the lead-acid battery according to one aspect of the present invention, by combining the negative electrode plate including the negative electrode material containing the organic expander and the first additive and the electrolyte solution containing the first component at a specific concentration, a synergistic effect can be obtained in each of the reduction of the amount of overcharge, and the improvement of the charge acceptability and the PSOC life performance.

When the total concentration of the first component in the electrolyte solution is less than 0.02 mol/L, it is difficult to secure high charge acceptability. When the concentration of each of the first components in the electrolyte solution is 0.35 mol/L or less, high charge acceptability can be secured, and the amount of overcharge can be reduced. In addition, excellent PSOC life performance can be secured. The concentration of each of the first components in the electrolyte solution is preferably 0.25 mol/L or less. In this case, it is easy to suppress crystal growth together with lead sulfate due to conversion of the first component into a sulfate. Thus, a decrease in charge acceptability can be further suppressed, and a decrease in PSOC life performance can be further suppressed. When a large amount of the first component is attracted to an electric double layer formed on the lead surface, adsorption itself of the first additive to the lead surface tends to be inhibited. However, by controlling the concentration of each of the first components in the electrolyte solution as described above, the amount of overcharge on the lead surface can be suppressed to a low level.

The first component preferably contains at least one of a lithium ion and a sodium ion, as well as an aluminum ion. In this case, the charge acceptability and the PSOC life performance can be further improved. The amount of overcharge can be further reduced.

From the viewpoint of securing higher charge acceptability, the first component preferably contains at least a lithium ion and an aluminum ion.

The first additive preferably contains a compound having a repeating structure of an oxypropylene unit (-O-CH(-CH₃)-CH₂-). Such a compound may not contain a repeating structure of an oxyethylene unit (-O-CH₂-CH₂-). In these cases, the charge acceptability and the PSOC life performance are further improved, and the amount of overcharge is further reduced. Since a compound containing a repeating structure of an oxypropylene unit easily forms a linear structure, it is considered that the amount of overcharge is reduced by thinly and widely coating the lead surface. The repeating structure of the oxypropylene unit has higher hydrophobicity than the repeating structure of the oxyethylene unit. Thus, it is considered that when the compound containing the repeating structure of the oxypropylene unit is used, the adsorptivity to lead sulfate is lowered as compared with the case of using a compound containing the repeating structure of the oxyethylene unit, and higher charge acceptability can be secured.

The compound having the repeating structure of the oxypropylene unit preferably has a number average molecular weight (Mn) of 1,000 or more and 10,000 or less. In this case, the first additive is likely to remain in the negative electrode material, and the amount of overcharge can be further reduced. Since the effect of suppressing uneven distribution of the first additive on the lead surface is enhanced, the charge acceptability and the PSOC life performance can be further improved.

When the first additive contains a sulfur element, the first additive tends to be easily adsorbed to the surface of lead sulfate by the action of the first component present near the lead sulfate. Thus, it is preferable that the first additive does not contain a sulfur element. As a result, adsorption of the first additive to lead sulfate can be reduced, so that higher charge acceptability and PSOC life performance can be easily secured.

It is also preferable when the surfactant includes a cationic surfactant. The cationic surfactant preferably contains a quaternary ammonium salt type cationic surfactant. Since the cationic surfactant has a cationic hydrophilic group, in the absence of the first component, the cationic surfactant exhibits high adsorptivity to the lead surface due to the action of hydrogen sulfate ions present near lead and lead sulfate, and tends to adhere to the surface of lead sulfate generated during discharge. When the electrolyte solution contains the first component at the concentration as described above, the adsorptivity of the cationic surfactant to the lead surface is relaxed by the action of the first component, and a wide range of the lead surface is easily covered thinly and widely. The cationic surfactant electrically repels the first component present near lead sulfate, and the adsorption of the cationic surfactant to lead sulfate is further reduced. Thus, higher charge acceptability and PSOC life performance can be obtained while suppressing the amount of overcharge to a low level.

The cationic surfactant is generally classified into an amine salt type, a quaternary ammonium salt type, or the like. The cationic surfactant preferably contains a quaternary ammonium salt (in other words, a quaternary ammonium salt type cationic surfactant). When the quaternary ammonium salt is used, not only high charge acceptability and PSOC life performance can be obtained, but also high adsorptivity to the lead surface is exhibited due to high cationicity of the hydrophilic group as compared with the amine salt, and therefore, the amount of overcharge can be further reduced.

The negative electrode material may contain a carbonaceous material. The first additive may have at least one or more hydrophobic groups and a hydrophilic group. At least one of the hydrophobic groups may be a long-chain aliphatic hydrocarbon group having 8 or more carbon atoms. The action of the long-chain aliphatic hydrocarbon group having 8 or more carbon atoms relaxes the adsorptivity of the first additive to the lead surface and reduces excessive coating. Since the first additive is easily adsorbed to the carbonaceous material, uneven distribution of the first additive on the surface of lead sulfate is reduced. Thus, higher charge acceptability and PSOC life performance are easily secured while suppressing the amount of overcharge to a low level.

Since the first additive is an organic additive, the charge acceptability is usually deteriorated when the first additive is contained in the negative electrode material. However, in the lead-acid battery according to one aspect of the present invention, while the lead surface can be thinly covered by direct or indirect interaction between the first additive and the first component, the coating of the surface of lead sulfate can be reduced. Thus, the amount of overcharge can be reduced, and high charge acceptability and PSOC life performance can be secured. Such an effect can be obtained even when the content of the first additive in the negative electrode material is small. From the viewpoint of securing a higher effect of reducing the amount of overcharge, the content of the first additive in the negative electrode material is preferably 50 ppm or more on a mass basis. From the viewpoint of easily securing higher charge acceptability and PSOC life performance, the content of the first additive in the negative electrode material is preferably 10,000 ppm or less on a mass basis.

In the lead-acid battery, it is sufficient that the first additive can be contained in the negative electrode material, and the source of the first additive contained in the negative electrode material is not particularly limited. The first additive may be contained in any of the components (for example, a negative electrode plate, a positive electrode plate, an electrolyte solution, and a separator) of the lead-acid battery when preparing the lead-acid battery. The first additive may be contained in one constituent element, or may be contained in two or more constituent elements (for example, a negative electrode plate and an electrolyte solution).

The organic expander preferably contains a condensate of a bisarene compound. The bisarene compound is generally classified as a synthetic organic expander. In general, when the negative electrode material contains the condensate of the bisarene compound, the specific surface area of the negative electrode material increases, and therefore, the amount of overcharge tends to increase. However, in the lead-acid battery according to one aspect of the present invention, since the electrolyte solution containing the first component at a specific concentration is combined with the negative electrode plate including the negative electrode material containing the organic expander and the first additive, the amount of overcharge can be suppressed to be low level even when the organic expander contains the condensate of the bisarene compound. By using the condensate of the bisarene compound, uneven distribution of the organic expander is reduced as compared with a lignin compound, and therefore, higher charge acceptability and PSOC life performance are easily obtained.

The lead-acid battery may be either a valve regulated (sealed) lead-acid battery (VRLA type lead-acid battery) or a flooded-type (vented type) lead-acid battery.

In the present specification, the content of the first additive in the negative electrode material and the concentration of the first component in the electrolyte solution are each determined for the negative electrode plate and the electrolyte solution taken out from the lead-acid battery in a full charge state.

### (Description of terminology)

### (Electrode material)

The negative electrode material and a positive electrode material are each usually held by the current collector. The electrode material is a portion of the plate which excludes the current collector. A member such as a mat or a pasting paper may be stuck to the plate. Such a member (also referred to as a sticking member) is used integrally with the plate and is thus included in the plate. When the plate includes the sticking member (such as a mat or a pasting paper), the electrode material is a part obtained by removing the current collector and the sticking member from the plate.

In the positive electrode plate, the clad-type positive electrode plate includes a plurality of porous tubes, a spine inserted into each tube, a current collector coupling the plurality of spines, a positive electrode material with which a spine inserted tube is filled, and a joint (spine protector) that couples the plurality of tubes. In the clad-type positive electrode plate, the positive electrode material is a part obtained by removing the tube, the spine, the current collector, and the joint (spine protector) from the plate. In the clad-type positive electrode plate, the spine and the current collector may be collectively referred to as a positive electrode current collector.

### (Polymer compound)

Among the first additives, the oxy C₂₋₄ alkylene unit of the polymer compound is a unit represented by -O-R¹-(R¹ represents a C₂₋₄ alkylene group). The polymer compound may have the repeating structure of oxy C₂₋₄ alkylene unit, and Mn is not particularly limited. For example, the number average molecular weight (Mn) of the polymer compound may be 300 or more.

### (Organic expander)

The organic expander refers to an organic compound among compounds having a function of suppressing shrinkage of lead as a negative active material when charge-discharge of the lead-acid battery is repeated. The organic expander often contains elemental sulfur.

### (Content of sulfur element in organic expander)

The sulfur element content in the organic expander being X µmol/g means that the content of the sulfur element contained per 1 g of the organic expander is X µmol.

### (Condensate of bisarene compound)

The condensate of the bisarene compound is a condensate containing a unit of the bisarene compound. The unit of the bisarene compound refers to a unit derived from the bisarene compound incorporated in a condensate. The bisarene compound is a compound in which two sites each having an aromatic ring are linked via a single bond or a linking group.

### (Number average molecular weight)

In the present specification, a number average molecular weight (Mn) is determined by gel permeation chromatography (GPC). A standard substance used for determining the Mn is polyethylene glycol.

### (Weight average molecular weight)

In the present specification, a weight average molecular weight (Mw) is determined by GPC. A standard substance used for determining the Mw is sodium polystyrene sulfonate.

### (Concentration of first component in electrolyte solution)

The concentration of each of the first components in the electrolyte solution means the concentration of individual ions including lithium ions, sodium ions, and aluminum ions. The total concentration of the first component in the electrolyte solution is the sum of the concentrations of the individual ions described above. For example, when the electrolyte solution contains lithium ions, sodium ions, and aluminum ions, the sum of the concentrations of these ions is the total concentration of the first component.

### (Full charge state)

The full charge state of the flooded-type lead-acid battery is defined by the definition of JIS D 5301: 2019. More specifically, the full charge state is a state where the lead-acid battery is charged in a water bath at 25°C ± 2°C at a current (A) 0.2 times as large as a numerical value (numerical value whose unit is Ah) described as a rated capacity until a terminal voltage (V) during charge measured every 15 minutes or an electrolyte solution density subjected to temperature correction to 20°C exhibits a constant value at three significant digits continuously three times. In the case of a valve regulated lead-acid battery, the full charge state is a state where the lead-acid battery is subjected to constant current constant voltage charge of 2.23 V/cell at the current (A) 0.2 times as large as the numerical value (numerical value whose unit is Ah) described as the rated capacity in an air tank of 25°C ± 2°C, and the charge is completed when the charge current during constant voltage charge becomes a value (A) of 0.005 times as large as the numerical value (numerical value whose unit is Ah) described in the rated capacity.

The lead-acid battery in the full charge state refers to a lead-acid battery obtained by fully charging a formed lead-acid battery. The full charge of the lead-acid battery may be performed immediately after formation so long as being performed after formation or may be performed after the lapse of time from formation (e.g., a lead-acid battery in use (preferably at the initial stage of use) after formation may be fully charged). The battery at the initial stage of use refers to a battery that has not been used for a long time and has hardly deteriorated.

### (Up-down direction of lead-acid battery or components of lead-acid battery)

In the present specification, the up-down direction of the lead-acid battery or components (such as plate, container, and separator) of the lead-acid battery means the up-down direction of the lead-acid battery in the vertical direction when the lead-acid battery is in use. Each of the positive electrode plate and the negative electrode plate includes a lug for connecting to an external terminal. In a horizontal valve regulated lead-acid battery or the like, the lug may be provided at a side portion of the plate so as to protrude laterally; however, in many lead-acid batteries, the lug is usually provided at an upper portion of the plate so as to protrude upward.

Hereinafter, the lead-acid battery according to an embodiment of the present invention will be described for each of the main constituent elements, but the present invention is not limited to the following embodiment.

### [Lead-acid battery]

### (Negative electrode plate)

The negative electrode plate usually includes a negative electrode current collector in addition to a negative electrode material.

### (Negative electrode current collector)

The negative electrode current collector may be formed by casting lead (Pb) or a lead alloy, or may be formed by processing a lead sheet or a lead alloy sheet. Examples of the processing method include expanding processing and punching processing. It is preferable to use the grid-like current collector as the negative electrode current collector because the negative electrode material is easy to be supported.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative electrode current collector may include a surface layer. The surface layer and the inner layer of the negative electrode current collector may have different compositions. The surface layer may be formed in a part of the negative electrode current collector. The surface layer may be formed in the lug of the negative electrode current collector. The surface layer of the lug may contain Sn or a Sn alloy.

### (Negative electrode material)

The negative electrode material contains the first additive and the organic expander. The negative electrode material further contains a negative active material (specifically, lead or lead sulfate) that exhibits a capacity through a redox reaction. The negative electrode material may contain at least one selected from the group consisting of a carbonaceous material and an additive other than the first additive. The additive other than the first additive may be referred to as a second additive. Examples of the second additive include barium sulfate, fibers (resin fibers and the like), and the like, but are not limited thereto. Although the negative active material in the charged state is spongy lead, the non-formed negative electrode plate is usually prepared using lead powder.

### (First additive)

The first additive is at least one selected from the group consisting of a polymer compound having the repeating structure of the oxy C₂₋₄ alkylene unit, and a cationic surfactant. The polymer compound having the repeating structure of the oxy C₂₋₄ alkylene unit also includes a polymer compound classified as a surfactant (more specifically, a nonionic surfactant).

### (Polymer compound)

Examples of the oxy C₂₋₄ alkylene unit contained in the polymer compound include an oxyethylene unit, an oxypropylene unit, an oxytrimethylene unit, an oxy 2-methyl-1,3-propylene unit, an oxy 1,4-butylene unit, an oxy 1,3-butylene unit, and the like. The polymer compound may have one kind or two or more kinds of such oxy C₂₋₄ alkylene units.

Such a polymer compound shows a peak derived from the oxy C₂₋₄ alkylene unit in a range of 3.2 ppm or more and 3.8 ppm or less in a chemical shift of a ¹H-NMR spectrum measured using deuterated chloroform as a solvent.

In the polymer compound, the repeating structure of the oxy C₂₋₄ alkylene unit may include one oxy C₂₋₄ alkylene unit and may include two or more oxy C₂₋₄ alkylene units. The polymer compound may contain one kind of the repeating structure or two or more kinds of the repeating structures.

Examples of the polymer compound include hydroxy compounds having a repeating structure of oxy C₂₋₄ alkylene units (poly C₂₋₄ alkylene glycols, copolymers containing a repeating structure of oxy C₂₋₄ alkylene, poly C₂₋₄ alkylene oxide adducts of a polyol, and the like), and etherified or esterified products of these hydroxy compounds.

Examples of the copolymer include copolymers containing different oxy C₂₋₄ alkylene units. The copolymer may be a block copolymer.

The polyol may be any of an aliphatic polyol, an alicyclic polyol, an aromatic polyol, a heterocyclic polyol, and the like. From the viewpoint that the polymer compound easily spreads thinly on the lead surface, aliphatic polyols, alicyclic polyols (such as polyhydroxycyclohexane and polyhydroxynorbornane), and the like are preferable, and among them, aliphatic polyols are preferable. Examples of the aliphatic polyol include aliphatic diols and polyols of triol or higher (such as glycerin, trimethylolpropane, pentaerythritol, sugar, and sugar alcohol). Examples of the aliphatic diol include an alkylene glycol having 5 or more carbon atoms. The alkylene glycol may be, for example, a C₅₋₁₄ alkylene glycol or a C₅₋₁₀ alkylene glycol. Examples of the sugar or sugar alcohol include sucrose, erythritol, xylitol, mannitol, and sorbitol. The sugar or sugar alcohol may have either a chain structure or a cyclic structure. In the polyalkylene oxide adduct of the polyol, the alkylene oxide corresponds to an oxy C₂₋₄ alkylene unit of the polymer compound and contains at least C₂₋₄ alkylene oxide. From the viewpoint that the polymer compound easily take a linear structure, the polyol is preferably a diol.

The etherified product has an -OR² group obtained by etherifying - OH groups (-OH groups composed of a hydrogen atom of a terminal group and an oxygen atom bonded to the hydrogen atom) at at least a part of terminals of the hydroxy compound having the repeating structure of oxy C₂₋₄ alkylene units (wherein R² is an organic group). Among terminals of the polymer compound, some terminals may be etherified, or all terminals may be etherified. For example, one terminal of a main chain of the linear polymer compound may be an -OH group, and the other terminal may be an -OR² group.

The esterified product has an -O-C(=O)-R³ group obtained by esterifying -OH groups (-OH groups composed of a hydrogen atom of a terminal group and an oxygen atom bonded to the hydrogen atom) at at least a part of terminals of the hydroxy compound having the repeating structure of oxy C₂₋₄ alkylene units (wherein R³ is an organic group). Among terminals of the polymer compound, some terminals may be esterified, or all terminals may be esterified. For example, one terminal of a main chain of the linear polymer compound may be an -OH group, and the other terminal may be an -O-C(=O)-R³ group.

Examples of each of the organic groups R² and R³ include a hydrocarbon group. The hydrocarbon group may have a substituent (such as a hydroxy group, an alkoxy group, and/or a carboxy group). The hydrocarbon group may be any of aliphatic, alicyclic, and aromatic. The aromatic hydrocarbon group and the alicyclic hydrocarbon group may have an aliphatic hydrocarbon group (for example, an alkyl group, an alkenyl group, or an alkynyl group) as a substituent. The number of carbon atoms of the aliphatic hydrocarbon group as a substituent may be, for example, 1 to 30, 1 to 20, 1 to 10, 1 to 6, or 1 to 4.

Examples of the aromatic hydrocarbon group include aromatic hydrocarbon groups having 24 or less carbon atoms (for example, 6 to 24). The number of carbon atoms of the aromatic hydrocarbon group may be 20 or less (for example, 6 to 20), 14 or less (for example, 6 to 14), or 12 or less (for example, 6 to 12). Examples of the aromatic hydrocarbon group include an aryl group, and a bisaryl group. Examples of the aryl group include a phenyl group and a naphthyl group. Examples of the bisaryl group include monovalent groups corresponding to bisarene. Examples of the bisarene include biphenyl and bisarylalkanes (for example, bis C₆₋₁₀ aryl C₁₋₄ alkanes (such as 2,2-bisphenylpropane)).

Examples of the alicyclic hydrocarbon group include alicyclic hydrocarbon groups having 16 or less carbon atoms. The alicyclic hydrocarbon group may be a bridged cyclic hydrocarbon group. The number of carbon atoms of the alicyclic hydrocarbon group may be 10 or less or 8 or less. The number of carbon atoms of the alicyclic hydrocarbon group is, for example, 5 or more, and may be 6 or more.

The number of carbon atoms of the alicyclic hydrocarbon group may be 5 (or 6) or more and 16 or less, 5 (or 6) or more and 10 or less, or 5 (or 6) or more and 8 or less.

Examples of the alicyclic hydrocarbon group include cycloalkyl groups (such as cyclopentyl group, cyclohexyl group, and cyclooctyl group), and cycloalkenyl groups (such as cyclohexenyl group and cyclooctenyl group). The alicyclic hydrocarbon group also includes hydrogenated products of the aromatic hydrocarbon groups.

Among the hydrocarbon groups, an aliphatic hydrocarbon group is preferable from the viewpoint that the polymer compound easily adheres thinly to the lead surface. The aliphatic hydrocarbon group may be saturated or unsaturated. Examples of the aliphatic hydrocarbon group include an alkyl group, an alkenyl group, an alkynyl group, a dienyl group having two carbon-carbon double bonds, trienyl group having three carbon-carbon double bonds, and the like. The aliphatic hydrocarbon group may be either linear or branched.

The number of carbon atoms of the aliphatic hydrocarbon group is, for example, 30 or less, and may be 26 or less or 22 or less, 20 or less or 16 or less, 14 or less or 10 or less, or 8 or less or 6 or less. The lower limit of the number of carbon atoms is 1 or more for an alkyl group, 2 or more for an alkenyl group and an alkynyl group, 3 or more for a dienyl group, and 4 or more for a trienyl group, depending on the type of the aliphatic hydrocarbon group. Among them, an alkyl group and an alkenyl group are preferable from the viewpoint that the polymer compound easily adheres thinly to the lead surface.

Specific examples of the alkyl group include methyl, ethyl, n-propyl, i-propyl, n-butyl, i-butyl, s-butyl, t-butyl, n-pentyl, neopentyl, i-pentyl, s-pentyl, 3-pentyl, t-pentyl, n-hexyl, 2-ethylhexyl, n-octyl, n-nonyl, n-decyl, i-decyl, undecyl, lauryl (dodecyl), tridecyl, myristyl, pentadecyl, cetyl, heptadecyl, stearyl, icosyl, henicosyl, and behenyl.

Specific examples of the alkenyl group include vinyl, 1-propenyl, allyl, cis-9-heptadecene-1-yl, palmitoleyl, and oleyl. An alkenyl group may be, for example, a C₂₋₃₀ alkenyl group or a C₂₋₂₆ alkenyl group, a C₂₋₂₂ alkenyl group or a C₂₋₂₀ alkenyl group, or a C₁₀₋₂₀ alkenyl group.

When at least one selected from the group consisting of an etherified product of a hydroxy compound having a repeating structure of oxy C₂₋₄ alkylene units and an esterified product of a hydroxy compound having a repeating structure of oxy C₂₋₄ alkylene units are used among the polymer compounds, it is preferable because the effect of suppressing the deterioration of the charge acceptability can be further enhanced. Even when these polymer compounds are used, the amount of overcharge can be reduced. Among the polymer compounds as described above, polymer compounds having the repeating structure of the oxypropylene unit, polymer compounds having the repeating structure of the oxyethylene unit, and the like are preferable.

The polymer compound may have one or more hydrophobic groups. Examples of the hydrophobic group include an aromatic hydrocarbon group, an alicyclic hydrocarbon group, and a long-chain aliphatic hydrocarbon group among the above-mentioned hydrocarbon groups. Examples of the long-chain aliphatic hydrocarbon group include aliphatic hydrocarbon groups having 8 or more carbon atoms among the above-mentioned aliphatic hydrocarbon groups (such as alkyl groups and alkenyl groups). The number of carbon atoms in the aliphatic hydrocarbon group is preferably 12 or more, more preferably 16 or more. Among them, the polymer compound having a long-chain aliphatic hydrocarbon group is preferable because it hardly causes excessive adsorption to lead and the effect of suppressing the deterioration of the charge acceptability is further enhanced. The polymer compound may be a polymer compound in which at least one of the hydrophobic groups is a long-chain aliphatic hydrocarbon group. The number of carbon atoms of the long-chain aliphatic hydrocarbon group may be 30 or less, 26 or less, or 22 or less.

The number of carbon atoms of the long-chain aliphatic hydrocarbon group may be 8 or more (or 12 or more) and 30 or less, 8 or more (or 12 or more) and 26 or less, 8 or more (or 12 or more) and 22 or less, 10 or more and 30 or less (or 26 or less), or 10 or more and 22 or less.

Among the polymer compounds, a polymer compound having a hydrophilic group and a hydrophobic group corresponds to a nonionic surfactant. A repeating structure of a polyoxyethylene unit exhibits high hydrophilicity and can be a hydrophilic group in the nonionic surfactant. Thus, the polymer compound having a hydrophobic group preferably contains a repeating structure of oxyethylene units. The polymer compound as described above can suppress excessive coverage of the surface of lead while being selectively adsorbed to lead due to a balance between hydrophobicity and high hydrophilicity due to the repeating structure of oxyethylene units, and thus, it is possible to further enhance the effect of suppressing the deterioration of the charge acceptability while reducing the amount of overcharge. The polymer compound as described above can secure high adsorptivity to lead even with a relatively low molecular weight (for example, Mn is 1000 or less).

Among the polymer compounds, a polyoxypropylene-polyoxyethylene block copolymer, an etherified product of a hydroxy compound having a repeating structure of oxyethylene units, an esterified product of a hydroxy compound having a repeating structure of oxyethylene units, and the like correspond to a nonionic surfactant.

In a polyoxypropylene-polyoxyethylene block copolymer and the like, the repeating structure of the oxyethylene unit corresponds to a hydrophilic group, and the repeating structure of the oxypropylene unit corresponds to a hydrophobic group. Such a copolymer is also included in the polymer compound having a hydrophobic group.

Examples of the polymer compound having a hydrophobic group and containing a repeating structure of oxyethylene units include etherified products of polyethylene glycol (such as alkyl ether), esterified products of polyethylene glycol (such as carboxylic acid ester), etherified products (such as alkyl ether) of a polyethylene oxide adduct of the polyol, and esterified products of a polyethylene oxide adduct (such as carboxylic acid ester) of the polyol (such as polyols of triol or higher). Specific examples of the polymer compound as described above include polyethylene glycol oleate, polyethylene glycol dioleate, polyethylene glycol dilaurate, polyethylene glycol distearate, polyoxyethylene coconut oil fatty acid sorbitan, polyoxyethylene sorbitan oleate, polyoxyethylene sorbitan stearate, polyoxyethylene lauryl ether, polyoxyethylene tetradecyl ether, and polyoxyethylene cetyl ether. However, the polymer compound is not limited thereto. Among them, use of an esterified product of polyethylene glycol, an esterified product of a polyethylene oxide adduct of the polyol, and the like is preferable because higher charge acceptability can be secured and the amount of overcharge can be remarkably reduced.

From the viewpoint of further enhancing the effect of reducing the amount of overcharge and easily securing higher charge acceptability and PSOC life performance, it is also preferable that the first additive contains a polymer compound having the repeating structure of the oxypropylene unit. The polymer compound containing the oxypropylene unit has peaks derived from -CH< and -CH₂- of the oxypropylene unit in a range of 3.2 ppm to 3.8 ppm in a chemical shift of ¹H-NMR spectrum. Since electron densities around a nucleus of a hydrogen atom in these groups are different, the peak is split. Such a polymer compound has peaks, for example, in a range of 3.2 ppm or more and 3.42 ppm or less and a range of more than 3.42 ppm and 3.8 ppm or less in a chemical shift of ¹H-NMR spectrum. The peak in the range of 3.2 ppm or more and 3.42 ppm or less is derived from -CH₂-, and the peak in the range of more than 3.42 ppm and 3.8 ppm or less is derived from -CH< and -CH₂-.

Examples of the polymer compound containing at least a repeating structure of oxypropylene units include polypropylene glycol, a copolymer containing a repeating structure of oxypropylene units, a polypropylene oxide adduct of the polyol, and etherified or esterified products thereof. Examples of the copolymer include an oxypropylene-oxyalkylene copolymer (provided that oxyalkylene is C₂₋₄ alkylene other than oxypropylene) and the like. Examples of the oxypropylene-oxyalkylene copolymer include an oxypropylene-oxyethylene copolymer, an oxypropylene-oxytrimethylene copolymer, and the like. The oxypropylene-oxyalkylene copolymer may be referred to as a polyoxypropylene-polyoxyalkylene copolymer (for example, a polyoxypropylene-polyoxyethylene copolymer). The oxypropylene-oxyalkylene copolymer may be a block copolymer (for example, a polyoxypropylene-polyoxyethylene block copolymer). Examples of the etherified product include polypropylene glycol alkyl ether, alkyl ether of an oxypropylene-oxyalkylene copolymer (such as alkyl ether of polyoxypropylene-polyoxyethylene copolymer), and the like. Examples of the esterified product include polypropylene glycol ester of carboxylic acid, carboxylic acid ester of an oxypropylene-oxyalkylene copolymer (such as carboxylic acid ester of polyoxypropylene-polyoxyethylene copolymer), and the like.

Examples of the polymer compound containing at least the repeating structure of the oxypropylene unit include polypropylene glycol, a polyoxypropylene-polyoxyethylene copolymer (such as a polyoxypropylene-polyoxyethylene block copolymer), a polypropylene glycol alkyl ether (an alkyl ether (such as methyl ether, ethyl ether, and butyl ether) in which the R² is an alkyl having 10 or less carbon atoms (or 8 or less or 6 or less carbon atoms)), a polyoxyethylene-polyoxypropylene alkyl ether (such as alkyl ether (such as butyl ether and hydroxyhexyl ether) in which the R² is an alkyl having 10 or less carbon atoms (or 8 or less or 6 or less carbon atoms)), a polypropylene glycol carboxylate (such as polypropylene glycol carboxylate (such as polypropylene glycol acetate) in which the R³ is an alkyl having 10 or less carbon atoms (or 8 or less or 6 or less carbon atoms)), and a polypropylene oxide adduct of polyol of triol or higher (such as polypropylene oxide adduct of glycerin). However, the polymer compound is not limited thereto.

In the polymer compound containing a repeating structure of the oxypropylene unit, the proportion of the oxypropylene unit is, for example, 5 mol% or more, and may be 10 mol% or more or 20 mol% or more. The proportion of the oxypropylene unit is, for example, 100 mol% or less.

From the viewpoint of further improving the charge acceptability and the PSOC life performance and further reducing the amount of overcharge, it is also preferable that the polymer compound having the repeating structure of the oxypropylene unit does not contain the repeating structure of the oxyethylene unit. In particular, when the first additive containing at least polypropylene glycol is used, an excellent effect is easily obtained.

The first additive may contain one kind or two or more kinds of polymer compounds.

The polymer compound may include, for example, a compound having Mn of 5 million or less, 1 million or less, 100,000 or less, 50,000 or less, or 20,000 or less. From the viewpoint of reducing uneven distribution of the polymer compound in the negative electrode material and securing higher charge acceptability and PSOC life performance, the polymer compound preferably contains a compound having Mn of 10,000 or less, and may contain a compound having Mn of 9000 or less or 8000 or less. The Mn of such a compound may be 300 or more, 400 or more, or 500 or more. From the viewpoint that the polymer compound remains in the negative electrode material and the effect of reducing the amount of overcharge is further enhanced, Mn of such a compound is preferably 1,000 or more, and more preferably 1,500 or more. As the polymer compound, two or more compounds having different Mn may be used. That is, the polymer compound may be a compound having a plurality of peaks of Mn in the distribution of the molecular weight. The Mn of the polymer compound having the repeating structure of the oxypropylene unit (including a polymer compound having no repeating structure of an oxyethylene unit) may be in such a range.

The Mn of the compound may be 300 or more (or 400 or more) and 5 million or less, 300 or more (or 400 or more) and 1 million or less, 300 or more (or 400 or more) and 100,000 or less, 300 or more (or 400 or more) and 50,000 or less, 300 or more (or 400 or more) and 20,000 or less, 300 or more (or 400 or more) and 10,000 or less, 300 or more (or 400 or more) and 9,000 or less, 300 or more (or 400 or more) and 8,000 or less, 500 or more (or 1,000 or more) and 5 million or less, 500 or more (or 1,000 or more) and 1 million or less, 500 or more (or 1,000 or more) and 100,000 or less, 500 or more (or 1,000 or more) and 50,000 or less, 500 or more (or 1,000 or more) and 20,000 or less, 500 or more (or 1,000 or more) and 10,000 or less, 500 or more (or 1,000 or more) and 9,000 or less, 500 or more (or 1,000 or more) and 8,000 or less, 1,500 or more and 5 million or less, 1,500 or more and 1 million or less, 1,500 or more and 100,000 or less, 500 or more and 50,000 or less, 1,500 or more and 20,000 or less, 1,500 or more and 10,000 or less, 1,500 or more and 9,000 or less, or 1,500 or more and 8,000 or less. The Mn of the polymer compound having the repeating structure of the oxypropylene unit (including a polymer compound having no repeating structure of an oxyethylene unit) may be in such a range.

### (Surfactant)

The surfactant includes a cationic surfactant. The surfactant contains a hydrophilic group and a hydrophobic group. The hydrophobic group of the surfactant is a functional group having higher hydrophobicity than the hydrophilic group. The first additive may contain one surfactant or two or more surfactants in combination.

A typical nonionic surfactant is a compound having the repeating structure of the oxyethylene unit and a hydrophobic group, and reference can be made to the description of the polymer compound. As a nonionic surfactant, a fatty acid ester of a polyol (such as a polyol (such as sugar or sugar alcohol) exemplified for the polymer compound) may be used. Examples of an anionic surfactant include a carboxylate, a sulfonate, and a sulfate. Examples of an amphoteric surfactant include an amino acid amphoteric surfactant and a betaine amphoteric surfactant. From the viewpoint of easily securing higher charge acceptability and PSOC life performance while suppressing the amount of overcharge to a low level, the surfactant contains a cationic surfactant.

Cationic surfactants are classified into amine salt type and quaternary ammonium salt type depending on the type of hydrophilic group. In the cationic surfactant, the amine salt moiety or the quaternary ammonium salt moiety corresponds to a hydrophilic group. In the negative electrode material, the hydrophilic group may exist in a salt state or may exist in a cation state. The kind of anion forming the salt is not particularly limited, and examples thereof include a halide ion and an anion derived from an inorganic acid. Examples of the halide ion include a fluoride ion, a chloride ion, a bromide ion, and an iodide ion. Examples of the inorganic acid corresponding to the anion derived from the inorganic acid include a hydrohalic acid (such as hydrochloric acid and hydrobromic acid) and an oxoacid (such as sulfuric acid and phosphoric acid).

The cationic surfactant usually has one hydrophilic group in one molecule. However, it is not intended to exclude a case where the cationic surfactant has a plurality of hydrophilic groups in one molecule.

The cationic surfactant has one or more hydrophobic group in one molecule. Examples of the hydrophobic group include a hydrocarbon group or a hydrophobic group described for the polymer compound. The number of hydrophobic groups in the cationic surfactant may be one or more, and may be two or more or three or more. Amine salt type cationic surfactants may typically have 1 or more and 3 or less hydrophobic groups per nitrogen atom of the amine salt. Quaternary ammonium salt type cationic surfactants may typically have four hydrophobic groups per nitrogen atom of the ammonium salt.

At least one of the hydrophobic groups of the cationic surfactant is preferably a long-chain aliphatic hydrocarbon group having 8 or more carbon atoms. The long-chain aliphatic hydrocarbon group having 8 or more carbon atoms of the cationic surfactant may be referred to as a first hydrophobic group. When the cationic surfactant has the first hydrophobic group, higher charge acceptability and PSOC life performance are easily secured while suppressing the amount of overcharge to a low level. The cationic surfactant may include one or more hydrophobic groups (also referred to as second hydrophobic groups) other than the first hydrophobic group.

The cationic surfactant may have one first hydrophobic group or two or more first hydrophobic groups in one molecule. When the cationic surfactant includes two or more first hydrophobic groups in one molecule, the types of at least two first hydrophobic groups may be the same, or all the first hydrophobic groups may be different. The upper limit of the number of the first hydrophobic groups in the cationic surfactant is not particularly limited. In the amine salt type, the number of the first hydrophobic groups is, for example, 3 or less, and may be 2 or less. In the quaternary ammonium salt type, the number of the first hydrophobic groups is, for example, 4 or less, and may be 3 or less or 2 or less.

The number of the first hydrophobic groups in one molecule of the cationic surfactant is, for example, 1 to 3, may be 1 to 2, or may be 2 to 3 in the amine salt type. The number of the first hydrophobic groups in one molecule of the cationic surfactant is, for example, 1 to 4, may be 1 to 3 or 1 to 2, or may be 2 to 4 or 2 to 3 in the quaternary ammonium salt type.

The cationic surfactant may have one second hydrophobic group or two or more second hydrophobic groups. When the cationic surfactant includes two or more second hydrophobic groups, the types of at least two second hydrophobic groups may be the same, or all the second hydrophobic groups may be different. The upper limit of the number of the second hydrophobic groups is not particularly limited, and may be, for example, 2 or less in the amine salt type, and may be, for example, 3 or less or 2 or less in the quaternary ammonium salt type. In the cationic surfactant, the total number of the first hydrophobic group and the second hydrophobic group in one molecule does not exceed 3 in the amine salt type and does not exceed 4 in the quaternary ammonium salt type per nitrogen atom.

From the viewpoint of more easily reducing the thickness of the coating film of the cationic surfactant formed on the lead surface, the first hydrophobic group is preferably an alkyl group or an alkenyl group.

The number of carbon atoms of the first hydrophobic group is, for example, 30 or less. The number of carbon atoms of the first hydrophobic group is preferably 26 or less, more preferably 24 or less, or 22 or less from the viewpoint of easily securing high adsorptivity of the cationic surfactant to the lead surface due to the balance with the hydrophilic group. Although the negative electrode material may contain a carbonaceous material, when the number of carbon atoms of the long-chain aliphatic hydrocarbon group is 26 or less (for example, 24 or less or 22 or less), adsorption of the cationic surfactant to the carbonaceous material is reduced, and adsorption to the lead surface is likely to occur. Thus, the amount of overcharge can be further reduced.

Examples of the second hydrophobic group include a hydrocarbon group described for the polymer compound. The hydrocarbon group may be a hydrocarbon group having a substituent (for example, an alkoxy group). The hydrocarbon group may be any of aliphatic, alicyclic, and aromatic. The aliphatic hydrocarbon group may have, as a substituent, at least one selected from the group consisting of an aromatic hydrocarbon group (for example, a phenyl group, a tolyl group, and a naphthyl group) and an alicyclic hydrocarbon group (for example, a cyclopentyl group and a cyclohexyl group). Examples of the aliphatic hydrocarbon group having such a substituent include a benzyl group, a phenethyl group, and a cyclohexylmethyl group. The number of carbon atoms of the aromatic hydrocarbon group and the alicyclic hydrocarbon group as the substituent is, for example, 5 or more and 20 or less, and may be 6 or more and 12 or less. The aromatic hydrocarbon group and the alicyclic hydrocarbon group may each include an aliphatic hydrocarbon group (for example, an alkyl group, an alkenyl group, or an alkynyl group) as a substituent. The number of carbon atoms of the aliphatic hydrocarbon group as a substituent may be, for example, 1 to 30, 1 to 20, 1 to 10, 1 to 6, or 1 to 4. In addition, for the second hydrophobic group, the description of the hydrocarbon group for the polymer compound can be referred to.

Among the hydrocarbon groups, an aliphatic hydrocarbon group is preferable as the second hydrophobic group from the viewpoint that the cationic surfactant easily adheres thinly to the lead surface. The number of carbon atoms of the aliphatic hydrocarbon group is less than 8, and may be 6 or less. The lower limit of the number of carbon atoms is 1 or more for an alkyl group, 2 or more for an alkenyl group and an alkynyl group, 3 or more for a dienyl group, and 4 or more for a trienyl group, depending on the type of the aliphatic hydrocarbon group. The second hydrophobic group is preferably an alkyl group or an alkenyl group (among them, the alkyl group). The number of carbon atoms in the alkyl group is more preferably 4 or less, and may be 3 or less or 2 or less.

Specific examples of the alkyl group as the second hydrophobic group include methyl, ethyl, n-propyl, i-propyl, n-butyl, i-butyl, s-butyl, t-butyl, n-pentyl, neopentyl, i-pentyl, s-pentyl, 3-pentyl, t-pentyl, and n-hexyl. Specific examples of the alkenyl group include vinyl, 1-propenyl, and allyl.

It is preferable that the cationic surfactant contains at least a quaternary ammonium salt type cationic surfactant from the viewpoint of easily obtaining high adsorptivity to lead due to high hydrophilicity. The cationic surfactant may contain an amine salt type cationic surfactant in addition to a quaternary ammonium salt type cationic surfactant.

Examples of the quaternary ammonium salt type cationic surfactant include tetraalkylammonium salts and alkylbenzalkonium chlorides. Examples of the tetraalkylammonium salt include a cationic surfactant having one first hydrophobic group (such as octyltrimethylammonium chloride, stearyltrimethylammonium chloride, cetyltrimethylammonium chloride, and behenyltrimethylammonium chloride), and a cationic surfactant having two first hydrophobic groups (such as distearyldimethylammonium chloride). As the tetraalkylammonium salt, a cationic surfactant having four second hydrophobic groups (such as tetramethylammonium chloride) may be used. Examples of the alkylbenzalkonium chloride include stearylbenzyldimethylammonium chloride, stearyldimethylbenzylammonium chloride, and stearylbenzalkonium chloride. Examples of the amine salt type cationic surfactant include n-octylamine hydrochloride and dodecylamine hydrochloride. These are merely illustrative, and cationic surfactants are not limited to these specific examples.

The first additive may contain one kind or two or more kinds of cationic surfactants.

Surfactants other than nonionic surfactants include many relatively low molecular weight compounds. The Mn of the nonionic surfactant can be selected from the range of Mn described for the polymeric compound. From the viewpoint of securing higher charge acceptability, the nonionic surfactant preferably contains a compound having Mn of 10,000 or less.

Among the first additives, anionic surfactants or amphoteric surfactants include surfactants containing sulfur elements derived from > S = O groups or the like. When the first additive contains a sulfur element, the adsorptivity of the first additive to lead sulfate tends to increase. Thus, it is preferable that the first additive does not contain a sulfur element. In this case, adsorption of the first additive to lead sulfate can be reduced, so that higher charge acceptability and PSOC life performance can be easily secured.

The content of the first additive in the negative electrode material is, for example, 8 ppm or more on a mass basis. From the viewpoint of further enhancing the effect of reducing the amount of overcharge, the content of the first additive in the negative electrode material is preferably 10 ppm or more or 50 ppm or more, more preferably 100 ppm or more, and may be 300 ppm or more or 400 ppm or more on a mass basis. The content of the first additive in the negative electrode material is, for example, 10,000 ppm or less, may be 6,000 ppm or less or 5,000 ppm or less, or may be 1,000 ppm or less or 700 ppm or less on a mass basis.

The content of the first additive in the negative electrode material may be, on a mass basis, 8 ppm or more (or 10 ppm or more) and 10,000 ppm or less, 8 ppm or more (or 10 ppm or more) and 6,000 ppm or less, 8 ppm or more (or 10 ppm or more) and 5,000 ppm or less, 8 ppm or more (or 10 ppm or more) and 1,000 ppm or less, 8 ppm or more (or 10 ppm or more) and 700 ppm or less, 50 ppm or more (or 100 ppm or more) and 10,000 ppm or less, 50 ppm or more (or 100 ppm or more) and 6,000 ppm or less, 50 ppm or more (or 100 ppm or more) and 5,000 ppm or less, 50 ppm or more (or 100 ppm or more) and 1,000 ppm or less, 50 ppm or more (or 100 ppm or more) and 700 ppm or less, 300 ppm or more (or 400 ppm or more) and 10,000 ppm or less, 300 ppm or more (or 400 ppm or more) and 6,000 ppm or less, 300 ppm or more (or 400 ppm or more) and 5,000 ppm or less, 300 ppm or more (or 400 ppm or more) and 1,000 ppm or less, or 300 ppm or more (or 400 ppm or more) and 700 ppm or less.

### (Organic expander)

The organic expanders are generally roughly classified into lignin compounds and synthetic organic expanders. It can also be said that the synthetic organic expander is an organic expander other than lignin compounds. Examples of the organic expander contained in the negative electrode material include a lignin compound, and a synthetic organic expander. The negative electrode material may contain one kind or two or more kinds of organic expanders.

Examples of the lignin compounds include lignin and lignin derivatives. Examples of the lignin derivative include lignin sulfonic acid or salts thereof (such as alkali metal salts (sodium salts and the like)).

The synthetic organic expander is an organic polymer containing sulfur element, and generally contains a plurality of aromatic rings in the molecule and sulfur element as a sulfur-containing group. Among the sulfur-containing groups, a sulfonic acid group or a sulfonyl group which is in a stable form is preferable. The sulfonic acid group may exist in an acid form, or may exist in a salt form like a Na salt.

At least a lignin compound may be used as the organic expander. The lignin compound tends to have lower charge acceptability than the synthetic organic expander. However, since the negative electrode material contains the first additive, even when a lignin compound is used as the organic expander, high charge acceptability can be secured.

As the organic expander, the case of using a condensate containing at least a unit of an aromatic compound is also preferable. Examples of such a condensate include a condensate of an aromatic compound with an aldehyde compound (such as at least one selected from the group consisting of aldehydes (for example, formaldehyde) and condensates thereof). The organic expander may contain a unit of one kind of an aromatic compound or a unit of two or more kinds of aromatic compounds.

Note that the unit of an aromatic compound refers to a unit derived from an aromatic compound incorporated in a condensate.

Examples of the aromatic ring of the aromatic compound include a benzene ring and a naphthalene ring. When the aromatic compound has a plurality of aromatic rings, the plurality of aromatic rings may be linked by a direct bond or a linking group (for example, an alkylene group (including an alkylidene group), a sulfone group), or the like. Examples of such a structure include bisarene structures (such as biphenyl, bisphenylalkane, and bisphenylsulfone). Examples of the aromatic compound include a compound having the above-mentioned aromatic ring and at least one selected from the group consisting of a hydroxy group and an amino group. The hydroxy group or the amino group may be directly bonded to the aromatic ring, or may be bonded as an alkyl chain including a hydroxy group or an amino group. Note that the hydroxy group also includes salts of hydroxy group (-OMe). The amino group also includes salts of an amino group (specifically, salts with anions). Examples of Me include alkali metals (such as Li, K, and Na) and Group 2 metals of the periodic table (such as Ca and Mg).

As the aromatic compound, bisarene compounds [bisphenol compounds, hydroxybiphenyl compounds, bisarene compounds including an amino group (such as bisarylalkane compounds including an amino group, bisarylsulfone compounds including an amino group, and biphenyl compounds including an amino group), hydroxyarene compounds (such as hydroxynaphthalene compounds and phenol compounds), aminoarene compounds (such as aminonaphthalene compounds, aniline compounds (aminobenzenesulfonic acid, alkylaminobenzenesulfonic acid, and the like), and the like] are preferable. The aromatic compound may further include a substituent. The organic expander may contain one or more or a plurality of residues of these compounds. As the bisphenol compound, bisphenol A, bisphenol S, bisphenol F, and the like are preferable. When the negative electrode material contains a condensate of a bisarene compound (such as a condensate with an aldehyde compound), the amount of overcharge tends to increase; however, the amount of overcharge can be suppressed to be low level by direct or indirect interaction between the first component and the first additive. The charge acceptability and the PSOC life performance can be improved as compared with the case of using the lignin compound.

The condensate preferably contains a unit of an aromatic compound including at least a sulfur-containing group. In particular, use of a condensate containing at least a unit of a bisphenol compound including a sulfur-containing group is advantageous in securing higher charge acceptability. From the viewpoint of enhancing the effect of reducing the amount of overcharge, it is also preferable to use a condensate of a naphthalene compound including a sulfur-containing group and including at least one selected from the group consisting of a hydroxy group and an amino group with an aldehyde compound.

The sulfur-containing group may be directly bonded to the aromatic ring contained in the compound, and for example, may be bonded to the aromatic ring as an alkyl chain including a sulfur-containing group. The sulfur-containing group is not particularly limited, and examples thereof include a sulfonyl group and a sulfonic acid group or a salt thereof.

In addition, as the organic expander, for example, at least a condensate containing at least one selected from the group consisting of units of the bisarene compound and units of a monocyclic aromatic compound (hydroxyarene compound and/or aminoarene compound, or the like) may be used. The organic expander may contain at least a condensate containing a unit of a bisarene compound and a unit of a monocyclic aromatic compound (among them, hydroxyarene compound). Examples of such a condensate include a condensate of a bisarene compound and a monocyclic aromatic compound with an aldehyde compound. As the hydroxyarene compound, a phenol sulfonic acid compound (phenol sulfonic acid, a substituted product thereof, or the like) is preferable. As the aminoarene compound, aminobenzenesulfonic acid, alkylaminobenzenesulfonic acid, and the like are preferable. As the monocyclic aromatic compound, a hydroxyarene compound is preferable.

The negative electrode material may contain, for example, the organic expander (first organic expander) having a sulfur element content of 2,000 µmol/g or more among the organic expanders. Examples of the first organic expander include the synthetic organic expander describe above (such as the condensate).

The sulfur element content of the first organic expander may be 2,000 µmol/g or more, and is preferably 3,000 µmol/g or more. The upper limit of the sulfur element content of the first organic expander is not particularly limited. From the viewpoint of further enhancing the effect of reducing the amount of overcharge, the sulfur element content of the organic expander is preferably 9,000 µmol/g or less, and more preferably 8,000 µmol/g or less.

The sulfur element content of the first organic expander may be, for example, 2,000 µmol/g or more (or 3,000 µmol/g or more) and 9,000 µmol/g or less, or 2,000 µmol/g or more (or 3,000 µmol/g or more) and 8,000 µmol/g or less.

The first organic expander may contain a condensate containing a unit of an aromatic compound including a sulfur-containing group, and the condensate may contain at least a unit of a bisarene compound (such as a bisphenol compound) as the unit of the aromatic compound.

The weight average molecular weight (Mw) of the first organic expander is preferably 7,000 or more. The Mw of the first organic expander is, for example, 100,000 or less, and may be 20,000 or less.

The negative electrode material can contain, for example, the organic expander (second organic expander) having a sulfur element content of less than 2,000 µmol/g. Examples of the second organic expander include a lignin compounds and synthetic organic expanders (in particular, lignin compounds) among the organic expanders described above. The sulfur element content of the second organic expander is preferably 1,000 µmol/g or less, and may be 800 µmol/g or less. The lower limit of the sulfur element content in the second organic expander is not particularly limited, and is, for example, 400 µmol/g or more.

The Mw of the second organic expander is, for example, less than 7,000. The Mw of the second organic expander is, for example, 3,000 or more.

The negative electrode material may contain the second organic expander in addition to the first organic expander. When the first organic expander and the second organic expander are used in combination, the mass ratio thereof can be arbitrarily selected.

The content of the organic expander contained in the negative electrode material is, for example, 0.005% by mass or more and may be 0.01% by mass or more. When the content of the organic expander is in such a range, a high discharge capacity can be secured. The content of the organic expander is, for example, 1.0% by mass or less and may be 0.5% by mass or less. From the viewpoint of further enhancing the effect of suppressing the deterioration of the charge acceptability, the content of the organic expander is preferably 0.3% by mass or less, more preferably 0.25% by mass or less, and may be 0.2% by mass.

The content of the organic expander contained in the negative electrode material may be 0.005% by mass or more (or 0.01% by mass or more) and 1.0% by mass or less, 0.005% by mass or more (or 0.01% by mass or more) and 0.5% by mass or less, 0.005% by mass or more (or 0.01% by mass or more) and 0.3% by mass or less, 0.005% by mass or more (or 0.01% by mass or more) and 0.25% by mass or less, or 0.005% by mass or more (or 0.01% by mass or more) and 0.2% by mass or less.

### (Carbonaceous material)

As the carbonaceous material contained in the negative electrode material, carbon black, graphite, hard carbon, soft carbon, and the like can be used. Examples of the carbon black include acetylene black, furnace black, and lamp black. Furnace black also includes ketjen black (product name).

In the present specification, among the carbonaceous materials, the carbonaceous material in which an intensity ratio I_{D}/I_{G} of a peak (D band) appearing in a range of 1,300 cm⁻¹ or more and 1,350 cm⁻¹ or less in a Raman spectrum to a peak (G band) appearing in a range of 1,550 cm⁻¹ or more and 1,600 cm⁻¹ or less is 0 or more and 0.9 or less is referred to as graphite. The graphite may be either artificial graphite or natural graphite.

The negative electrode material may contain one kind or two or more kinds of carbonaceous materials.

The content of the carbonaceous material in the negative electrode material is, for example, 0.05% by mass or more and may be 0.10% by mass or more. The content of the carbonaceous material is, for example, 5% by mass or less and may be 3% by mass or less.

The content of the carbonaceous material in the negative electrode material may be 0.05% by mass or more and 5% by mass or less, 0.05% by mass or more and 3% by mass or less, 0.10% by mass or more and 5% by mass or less, or 0.10% by mass or more and 3% by mass or less.

### (Barium sulfate)

The content of barium sulfate in the negative electrode material is, for example, 0.05% by mass or more and may be 0.10% by mass or more. The content of barium sulfate in the negative electrode material is, for example, 3% by mass or less and may be 2% by mass or less.

The content of barium sulfate in the negative electrode material may be 0.05% by mass or more and 3% by mass or less, 0.05% by mass or more and 2% by mass or less, 0.10% by mass or more and 3% by mass or less, or 0.10% by mass or more and 2% by mass or less.

### (Analysis of negative electrode material or constituent components)

Hereinafter, a method of analyzing the negative electrode material or constituent components thereof will be described. Prior to measurement or analysis, the lead-acid battery in the fully charged state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 ± 5°C in a reduced pressure environment for about six hours. After drying, when the sticking member is included in the negative electrode plate, the sticking member is removed by peeling. Next, the negative electrode material is separated from the negative electrode plate to obtain a sample (hereinafter referred to as sample A). The sample A is ground as necessary and subjected to analysis.

### (1) Analysis of first additive having repeating structure of oxy C₂₋₄ alkylene unit

The first additive (specifically, a polymer compound and a surfactant having a repeating structure of an oxy C₂₋₄ alkylene unit) having a repeating structure of the oxy C₂₋₄ alkylene unit is analyzed in the following procedure.

### (1-1) Qualitative analysis

### (a) Analysis of oxy C₂₋₄ alkylene unit

The pulverized sample A is used. 150.0 ± 0.1 mL of chloroform is added to 100.0 ± 0.1 g of the sample A, and the mixture is stirred at 20 ± 5°C for 16 hours to extract the first additive. Thereafter, the solid content is removed by filtration. For a chloroform solution in which the first additive obtained by the extraction is dissolved or the first additive obtained by drying the chloroform solution, for example, information is obtained from at least one selected from an infrared spectroscopic spectrum, an ultraviolet-visible absorption spectrum, an NMR spectrum, and LC/MS and pyrolysis GC/MS to specify the first additive.

Chloroform is distilled off under reduced pressure from the chloroform solution in which the first additive obtained by the extraction is dissolved to recover a chloroform soluble component. The chloroform soluble component is dissolved in deuterated chloroform, and a ¹H-NMR spectrum is measured under the following conditions. From this ¹H-NMR spectrum, a peak with a chemical shift in the range of 3.2 ppm or more and 3.8 ppm or less is confirmed. Also, from the peak in this range, the type of the oxy C₂₋₄ alkylene unit is specified.

Apparatus: type AL400 nuclear magnetic resonance spectrometer, manufactured by JEOL Ltd.
Observation frequency: 395.88 MHz
Pulse width: 6.30 µs
Pulse repeating time: 74.1411 seconds
Number of integrations: 32
Measurement temperature: room temperature (20 to 35°C)
Reference: 7.24 ppm
Sample tube diameter: 5 mm

### (b) Analysis of hydrophobic group in esterified product

When the first additive is an esterified product of a hydroxy compound, in (a) above, a predetermined amount of the first additive obtained by drying a chloroform solution in which the first additive obtained by extraction is dissolved is collected, and an aqueous potassium hydroxide solution is added. As a result, the esterified product is saponified to produce a fatty acid potassium salt and a hydroxy compound. The watersoluble aqueous potassium solution is added until completion of the saponification. To the resulting mixture, methanol and a solution of boron trifluoride are added, and the mixture is stirred to convert the fatty acid potassium salt into fatty acid methyl ester. The resulting mixture is analyzed by pyrolysis GC-MS under the following conditions to identify the hydrophobic group contained in the esterified product.
Analyzer: high-performance general-purpose gas chromatogram GC-2014 manufactured by Shimadzu Corporation
Column: DEGS (diethylene glycol succinate ester) 2.1 m
Oven temperature: 180 to 120°C
Inlet temperature: 240°C
Detector temperature: 240°C
Carrier gas: He (flow rate: 50 mL/min)
Injection amount: 1 µL to 2 µL

### (c) Analysis of hydrophobic group in etherified product

When the first additive is an etherified product of a hydroxy compound, in (a) above, a predetermined amount of the first additive obtained by drying a chloroform solution in which the first additive obtained by extraction is dissolved is collected, and hydrogen iodide is added. As a result, an iodide (R³I) corresponding to the organic group (R³ described above) of the ether moiety of the first additive is produced, and a diiodo C₂₋₄ alkane corresponding to the oxy C₂₋₄ alkylene unit is produced. The hydrogen iodide described above is added in an amount sufficient to complete the conversion of the etherified product to the iodide and the diiodo C₂₋₄ alkane. The resulting mixture is analyzed by pyrolysis GC-MS under the same conditions as in (b) above to identify the hydrophobic group contained in the etherified product.

### (1-2) Quantitative analysis

An appropriate amount of the chloroform soluble component is dissolved in deuterated chloroform together with tetrachloroethane (TCE) of mᵣ (g) measured with an accuracy of ± 0.0001 g, and a ¹H-NMR spectrum is measured. An integrated value (Sₐ) of the peak in which the chemical shift is present in the range of 3.2 to 3.8 ppm and an integrated value (Sᵣ) of a peak derived from TCE are determined, and mass-based content Cₙ (ppm) of the first additive having a repeating structure of the oxy C₂₋₄ alkylene unit in the negative electrode material is determined from the following formula.${C}_{n} = {S}_{a} / {S}_{r} \times {N}_{r} / {N}_{a} \times {M}_{a} / {M}_{r} \times {m}_{r} / m \times 1 , 000,000$ (wherein Mₐ is a molecular weight of a structure showing a peak in a chemical shift range of 3.2 to 3.8 ppm (more specifically, a molecular weight of the repeating structure of oxy C₂₋₄ alkylene units), and Nₐ is the number of hydrogen atoms bonded to a carbon atom of a main chain of the repeating structure. Nᵣ and Mᵣ are the number of hydrogen contained in a molecule of reference substance and the molecular weight of the reference substance, respectively, and m (g) is the mass of the negative electrode material used for extraction.)
Since the reference substance in this analysis is TCE, Nᵣ = 2 and Mᵣ = 168. In addition, m = 100.

For example, when the first additive is polypropylene glycol, Mₐ is 58, and Nₐ is 3. When the first additive is polyethylene glycol, Mₐ is 44, and Nₐ is 4. In the case of a copolymer, Nₐ and Mₐ are each values obtained by averaging Nₐ values and Mₐ values of each monomer unit using a molar ratio (mol%) of each monomer unit contained in the repeating structure.

In the quantitative analysis, the integrated value of the peak in the ¹H-NMR spectrum is determined using data processing software "ALICE" manufactured by JEOL Ltd.

### (1-3) Mn measurement of first additive

Using the chloroform soluble component, GPC measurement of the first additive is performed under the following conditions using the following apparatuses. Separately, a calibration curve (standard curve) is prepared from a plot of the Mn of the standard substance and elution time. The Mn of the first additive is calculated based on the standard curve and the GPC measurement result of the first additive. However, the esterified product, the etherified product, and the like may be decomposed in the chloroform soluble component.

Analysis system: 20A system (manufactured by Shimadzu Corporation)
Column: two columns of GPC KF-805L (manufactured by Shodex) connected in series
Column temperature: 30°C ± 1°C
Mobile phase: tetrahydrofuran
Flow rate: 1 mL/min.
Concentration: 0.20% by mass
Injection amount: 10 µL
Standard substance: polyethylene glycol (Mn = 2,000,000, 200,000, 20,000, 2,000, 200)
Detector: differential refractive index detector (Shodex RI-201H, manufactured by Shodex)

### (2) Analysis of surfactant

Surfactants which do not have the repeating structure of the oxy C₂₋₄ alkylene unit are analyzed in the following procedure.

### (2-1) Qualitative analysis

The pulverized sample A is used. About 1 g of sample A is collected to accurately weigh the mass and 5 mL of chloroform is added to prepare a mixture. The mixture is stirred at 20 ± 5°C with application of ultrasound for 5.5 hours to extract a cationic surfactant. Thereafter, a filtrate is recovered by filtration, and a filtered solid content and a case are washed with chloroform to recover a washing liquid. The filtrate and the washing liquid are mixed and concentrated using nitrogen gas.

For the resulting concentrate, information is obtained from at least one selected from an infrared spectroscopic spectrum, an ultraviolet-visible absorption spectrum, an NMR spectrum, liquid chromatograph/mass spectrometry (LC/MS), and pyrolysis gas chromatograph/mass spectrometry (GC/MS) to identify a surfactant. Since a counter anion of the cationic surfactant may be ion-exchanged in sulfuric acid, a structure other than the counter anion is specified.

### (2-2) Quantitative analysis

A concentrate obtained by the same procedure as in (2-1) above is diluted with chloroform until a volume of a solution becomes 10 mL. In this way, a sample (sample B) for analysis is prepared.

The sample B is used to quantify the content of the surfactant in the negative electrode material by LC/MS analysis utilizing an SRM (selected reaction monitoring) method. More specifically, an LC/MS spectrum of the sample B is measured, and the concentration of the surfactant in the sample B is determined from peak intensity of a characteristic specific peak of the surfactant by a calibration curve method. Then, the content of the surfactant in the negative electrode material is determined from the determined concentration and the mass of the sample A collected at the time of preparing the sample B. A calibration curve showing a relationship between the peak intensity of the specific peak and the concentration of the surfactant in an analytical material is prepared in advance by separately providing a surfactant specified by qualitative analysis and using this surfactant. For example, when the surfactant is octyltrimethylammonium chloride, a characteristic peak is detected at m/z = 207.78 in the LC/MS spectrum. The LC/MS analysis is performed under the following conditions.

LC/MS apparatus: LC part (1200 Series manufactured by Agilent Technologies, Inc.), MS part (6140 manufactured by Agilent Technologies, Inc.)
Column: Unison UK-C18 UP (inner diameter 2 mm, length 10 cm) manufactured by Imtakt
Column temperature: 50°C ± 1°C
Mobile phase: a mixture of a first solution and a second solution is used, a mixing ratio of the first solution and the second solution is gradually changed from 20: 80 (volume ratio) to 0: 100 (volume ratio) over 3 minutes, and only the second solution is used from 3 to 10 minutes later.
First solution = aqueous solution containing ammonium formate at a concentration of 10 mmol/L and formic acid at a concentration of 10 mmol/L
Second solution = methanol solution containing ammonium formate in a concentration of 10 mmol/L and formic acid in a concentration of 10 mmol/L
Flow rate: 0.4 mL/min
Injection amount of sample B: 1 µL
Detector: MS (ESI positive)
Measurement mode: SCAN (mass measurement range: m/z = 100 to 1,000)

### (3) Analysis of organic expander

### (3-1) Qualitative analysis of organic expander in negative electrode material

The pulverized sample A is immersed in a 1 mol/L sodium hydroxide aqueous solution to extract the organic expander. Next, the first organic expander and the second organic expander are separated from the extract as necessary. For each separated material containing each organic expander, insoluble components are removed by filtration, and the obtained solution is desalted, then concentrated, and dried. The desalination is performed by using a desalination column, by causing the solution to pass through an ionexchange membrane, or by placing the solution in a dialysis tube and immersing the solution in distilled water. The solution is dried to obtain a powder sample (hereinafter, referred to as a sample C) of the organic expander.

A type of the organic expander is specified using a combination of information obtained from an infrared spectroscopic spectrum measured using the sample C of the organic expander obtained as described above, an ultraviolet-visible absorption spectrum measured by an ultraviolet-visible absorption spectrometer after the sample C is diluted with distilled water or the like, an NMR spectrum of a solution obtained by dissolving the sample C in a predetermined solvent such as heavy water, pyrolysis GC/MS capable of obtaining information on individual compounds constituting a substance, and the like.

The first organic expander and the second organic expander are separated from the extract as follows. First, the extract is measured by infrared spectroscopy, NMR, and/or GC/MS to determine whether or not a plurality of types of organic expanders are contained. Next, a molecular weight distribution is measured by GPC analysis of the extract, and if the plurality of types of organic expanders can be separated by molecular weight, the organic expander is separated by column chromatography based on a difference in molecular weight. When it is difficult to separate the organic expander due to the difference in molecular weight, one of the organic expanders is separated by a precipitation separation method using a difference in solubility that varies depending on the type of the functional group and/or the amount of the functional group of the organic expander. Specifically, an aqueous sulfuric acid solution is added dropwise to a mixture obtained by dissolving the extract in an NaOH aqueous solution to adjust the pH of the mixture, thereby aggregating and separating one of the organic expanders. The insoluble component is removed by filtration as described above from a mixture obtained by dissolving the separated material again in the NaOH aqueous solution. The remaining solution after separating one of the organic expanders is concentrated. The obtained concentrate contains the other organic expander, and the insoluble component is removed from the concentrate by filtration as described above.

### (3-2) Quantitative determination of content of organic expander in negative electrode material

Similarly to (3-1) above, for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a calibration curve prepared in advance.

When a lead-acid battery in which the content of the organic expander is unknown is obtained and the content of the organic expander is measured, a structural formula of the organic expander cannot be strictly specified, so that the same organic expander may not be used for the calibration curve. In this case, the content of the organic expander is measured using the ultraviolet-visible absorption spectrum by creating a calibration curve using a separately available organic polymer in which the ultraviolet-visible absorption spectrum, the infrared spectroscopic spectrum, the NMR spectrum, and the like exhibit similar shapes with respect to the organic expander extracted from the negative electrode of the battery.

### (3-3) Content of sulfur element in organic expander

Similarly to (3-1) above, after the sample C of the organic expander is obtained, sulfur element in 0.1 g of the organic expander is converted into sulfuric acid by an oxygen combustion flask method. At this time, the sample C is burned in a flask containing an adsorbent to obtain an eluate in which sulfate ions are dissolved in the adsorbent. Next, the eluate is titrated with barium perchlorate using thorin as an indicator to determine the content (c1) of the sulfur element in 0.1 g of the organic expander. Next, c1 is multiplied by 10 to calculate the content (µmol/g) of the sulfur element in the organic expander per 1 g.

### (3-4) Mw measurement of organic expander

Similarly to (3-1) above, after the sample C of the organic expander is obtained, GPC measurement of the organic expander is performed under the following conditions using the following apparatuses. Separately, a calibration curve (standard curve) is prepared from a plot of Mw of the standard substance and elution time. The Mw of the organic expander is calculated based on the standard curve and the GPC measurement result of the organic expander.

GPC apparatus: Build-up GPC system SD-8022/DP-8020/AS-8020/CO-8020/UV-8020 (manufactured by Tosoh Corporation)
Column: TSKgel G4000SWXL, G2000SWXL (7.8 mm I.D. × 30 cm) (manufactured by Tosoh Corporation)
Detector: UV detector, λ = 210 nm
Eluent: Mixed solution of NaCl aqueous solution having a concentration of 1 mol/L: acetonitrile (volume ratio = 7 : 3)
Flow rate: 1 mL/min.
Concentration: 10 mg/mL
Injection amount: 10 µL
Standard substance: Na polystyrene sulfonate (Mw = 275,000, 35,000, 12,500, 7,500, 5,200, 1,680)

### (4) Quantitative determination of carbonaceous material and barium sulfate

To 10 g of the pulverized sample A, 50 ml of nitric acid having a concentration of 20% by mass is added and heated for about 20 minutes to dissolve the lead component as lead ions. The resulting solution is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The filtered sample is a mixed sample of the carbonaceous material and barium sulfate. By subtracting the mass of the membrane filter from the total mass of a dried mixed sample (hereinafter, referred to as a sample D) and the membrane filter, a mass (Mₘ) of the sample D is measured. Thereafter, the sample D is placed in a crucible together with a membrane filter and is burned and incinerated at 1,300°C or higher. The residue remaining is barium oxide. The mass of barium sulfate (M_{B}) is determined by converting the mass of barium oxide to the mass of barium sulfate. The mass of the carbonaceous material is calculated by subtracting the mass M_{B} from the mass Mₘ.

### (Others)

The negative electrode plate can be formed in such a manner that a negative electrode current collector is coated or filled with a negative electrode paste, which is then cured and dried to fabricate a non-formed negative electrode plate, and thereafter, the non-formed negative electrode plate is formed. The negative electrode paste is prepared, for example, by adding water and sulfuric acid (or sulfuric acid aqueous solution) to a lead powder, the organic expander, and the first additive, and if necessary, at least one selected from the group consisting of a carbonaceous material, and other additives, and mixing the mixture. At the time of curing, it is preferable to cure the non-formed negative electrode plate at a higher temperature than room temperature and high humidity.

The formation can be performed by charging the element in the state where the element including the non-formed negative electrode plate immersed in the electrolyte solution containing sulfuric acid in the container of the lead-acid battery. However, the formation may be performed before the lead-acid battery or the element is assembled. The formation produces spongy lead.

### (Positive electrode plate)

The positive electrode plate of a lead-acid battery can be classified into a paste type, a clad type, and the like. Either a paste-type or a clad-type positive electrode plate may be used. The paste-type positive electrode plate includes a positive electrode current collector and a positive electrode material. The configuration of the clad-type positive electrode plate is as described above.

The positive electrode current collector may be formed by casting lead (Pb) or a lead alloy, or may be formed by processing a lead sheet or a lead alloy sheet. Examples of the processing method include expanding processing and punching processing. It is preferable to use a grid-shaped current collector as the positive electrode current collector because the positive electrode material is easy to be supported.

As a lead alloy used for the positive electrode current collector, a Pb-Sb-based alloy, a Pb-Ca-based alloy, or a Pb-Ca-Sn-based alloy are preferred in terms of corrosion resistance and mechanical strength. The positive electrode current collector may include a surface layer. The surface layer and the inner layer of the positive electrode current collector may have different compositions. The surface layer may be formed in a part of the positive electrode current collector. The surface layer may be formed only on the grid part, only on the lug part, or only on the frame rib part of the positive electrode current collector.

The positive electrode material contained in the positive electrode plate contains a positive active material (lead dioxide or lead sulfate) that exhibits a capacity through a redox reaction. The positive electrode material may contain another additive as needed.

A non-formed paste-type positive electrode plate is obtained by filling a positive electrode current collector with a positive electrode paste, and curing and drying the paste. The positive electrode paste is prepared by mixing lead powder, an additive, water, and sulfuric acid. A non-formed clad-type positive electrode plate is formed by filling a porous tube, into which a spine connected by a current collector is inserted with a lead powder or a slurry-like lead powder, and joining a plurality of tubes with a joint (spine protector). Thereafter, the positive electrode plate is obtained by forming the non-formed positive electrode plates.

The formation can be performed by charging the element in the state where the element including the non-formed positive electrode plate immersed in the electrolyte solution containing sulfuric acid in the container of the lead-acid battery. However, the formation may be performed before the lead-acid battery or the element is assembled.

### (Separator)

The separator can be disposed between the negative electrode plate and the positive electrode plate. As the separator, at least one selected from a nonwoven fabric and a microporous membrane, and the like are used.

The nonwoven fabric is a mat in which fibers are intertwined without being woven and is mainly made of fibers. In the nonwoven fabric, for example, 60% by mass or more of the nonwoven fabric is formed of fibers. As the fibers, there can be used glass fibers, polymer fibers (such as polyolefin fiber, acrylic fiber, and polyester fiber (polyethylene terephthalate fiber, or the like)), pulp fibers, and the like. Among them, glass fibers are preferable. The nonwoven fabric may contain components other than the fibers (for example, an acid resistant inorganic powder and a polymer as a binder).

On the other hand, the microporous film is a porous sheet mainly made of components except for fiber components and is obtained by, for example, extrusion molding a composition containing, for example, a pore-forming additive into a sheet shape and then removing the pore-forming additive to form pores. The microporous film is preferably made of a material having acid resistance and is preferably composed mainly of a polymer component. As the polymer component, a polyolefin (a polyethylene, a polypropylene, etc.) is preferable. Examples of the pore-forming additive include at least one selected from the group consisting of a polymer powder and oil.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded part is along the horizontal direction of the lead-acid battery (e.g., such that the bent part may be parallel to the horizontal direction), and the separator may be disposed such that the folded part is along the vertical direction (e.g., such that the bent part is parallel to the vertical direction). In the separator folded in the bellows shape, recesses are alternately formed on both main surface sides of the separator. Since the lug parts are usually formed on the upper part of the positive electrode plate and the negative electrode plate, when the separator is disposed such that the folded parts are along the horizontal direction of the lead-acid battery, the positive electrode plate and the negative electrode plate are each disposed only in the recess on one main surface side of the separator (i.e., a double separator is interposed between the adjacent positive and negative electrode plates). When the separator is disposed such that the folded part is along the vertical direction of the lead-acid battery, the positive electrode plate can be housed in the recess on one main surface side, and the negative electrode plate can be housed in the recess on the other main surface side (i.e., the separator can be interposed singly between the adjacent positive and negative electrode plates). When the bag-shaped separator is used, the bag-shaped separator may house the positive electrode plate or may house the negative electrode plate.

### (Electrolyte solution)

The electrolyte solution is an aqueous solution containing sulfuric acid and may be gelled as necessary. The electrolyte solution contains metal ions. The metal ion includes at least one first component selected from the group consisting of a lithium ion, a sodium ion, and an aluminum ion. When the electrolyte solution contains the first component, the effect of reducing the amount of overcharge, the effect of improving the charge acceptability, and the effect of improving the PSOC life performance can be obtained by direct or indirect interaction with the first additive contained in the negative electrode material.

From the viewpoint of securing higher charge acceptability and PSOC life performance, the electrolyte solution may contain at least one of lithium ions and sodium ions, as well as aluminum ions. In this case, the amount of overcharge can be further reduced. In particular, when the first component contains at least lithium ions and aluminum ions, the charge acceptability can be further improved, which is preferable.

The concentration of each of the first components in the electrolyte solution may be 0.35 mol/L or less. From the viewpoint of easily securing higher charge acceptability and PSOC life performance, the concentration of each of the first components is preferably 0.3 mol/L or less or 0.25 mol/L or less, and may be 0.2 mol/L or less. The concentration of each of the first components is determined, for example, such that the total concentration of the first components is 0.02 mol/L or more. The concentration of each of the first components is, for example, 0.01 mol/L or more, and may be 0.02 mol/L or more.

The concentration of each of the first components in the electrolyte solution may be 0.01 mol/L or more (or 0.02 mol/L or more) and 0.35 mol/L or less, 0.01 mol/L or more (or 0.02 mol/L or more) and 0.3 mol/L or less, 0.01 mol/L or more (or 0.02 mol/L or more) and 0.25 mol/L or less, or 0.01 mol/L or more (or 0.02 mol/L or more) and 0.2 mol/L or less.

The total concentration of the first component in the electrolyte solution is 0.02 mol/L or more. When the total concentration of the first component is in such a range, excellent charge acceptability can be secured. The upper limit of the total concentration of the first component can be determined according to the concentration of each of the first components. From the viewpoint of easily securing higher charge acceptability and PSOC life performance, the total concentration of the first component is preferably 0.7 mol/L or less, and may be 0.5 mol/L or less or 0.4 mol/L or less.

Even when constituent elements of the lead-acid battery other than the electrolyte solution, such as the negative electrode plate, the positive electrode plate, and the separator, contain the same metal component (such as a metal compound) as the type of the first component, the content of the metal component in the components is small, and the influence on the concentration of the first component in the electrolyte solution is small. Specifically, even if a constituent element other than the electrolyte solution contains the same metal component (for example, sodium lignin sulfonate in the negative electrode material and sodium salt as a surfactant) as the type of the first component, when an electrolyte solution to which the first component or a compound that generates the first component is not added is used, the total concentration of the first component in the electrolyte solution is less than 0.02 mol/L (usually, less than 0.01 mol/L).

The electrolyte solution may contain at least one selected from the group consisting of a cation (for example, a metal cation) other than the first component, and an anion (for example, an anion other than a sulfate anion (a phosphate ion, etc.)) as necessary. A metal cation other than the first component may be referred to as a second component. Examples of the second component include magnesium ions and potassium ions.

The total concentration of the second component in the electrolyte solution may be, for example, 0.01 mol/L or less. It is also preferable that the electrolyte solution does not contain the second component. The case where the electrolyte solution does not contain the second component includes a case where the second component in the electrolyte solution is not more than a detection limit.

The electrolyte solution may contain the first additive.

The specific gravity of the electrolyte solution in the lead-acid battery in the full charge state at 20°C is, for example, 1.20 or more and may be 1.25 or more. The specific gravity of the electrolyte solution at 20°C is 1.35 or less and preferably 1.32 or less.

The specific gravity of the electrolyte solution at 20°C may be 1.20 or more and 1.35 or less, 1.20 or more and 1.32 or less, 1.25 or more and 1.35 or less, or 1.25 or more and 1.32 or less.

The concentration of each of the first component and the second component in the electrolyte solution is determined by inductively coupled plasma (ICP) emission spectroscopy of the electrolyte solution taken out from the lead-acid battery in the full charged state. More specifically, for the electrolyte solution, the type of metal ions in the electrolyte solution is identified using an ICP emission spectrophotometer, and emission intensity of the metal ions is measured. The concentration of the metal ions contained in the electrolyte solution is determined from the measurement value of the emission intensity and a calibration curve prepared in advance. As the ICP emission spectrophotometer, ICPS-8000 manufactured by Shimadzu Corporation is used.

### (Others)

The lead-acid battery can be obtained by a manufacturing method including a step of storing an element and an electrolyte solution in a cell chamber of a container. Each cell of the lead-acid battery includes an element and an electrolyte solution stored in each cell chamber. The element is assembled by stacking a positive electrode plate, a negative electrode plate, and a separator such that the separator is interposed between the positive electrode plate and the negative electrode plate prior to storage in the cell chamber. The positive electrode plate, the negative electrode plate, the electrolyte solution, and the separator are each prepared prior to assembly of the element. A method of manufacturing the lead-acid battery may include a step of forming at least one of the positive electrode plate and the negative electrode plate as necessary after a step of storing the element and the electrolyte solution in the cell chamber.

The number of plates in the element may be one or two or more. When the element includes two or more negative electrode plates, if the condition that the negative electrode material contains the first additive is satisfied in at least one negative electrode plate, the effect of improving the charge acceptability for the negative electrode plate can be obtained, and the effect of reducing the amount of overcharge and the effect of improving the PSOC life performance can be obtained according to the number of such negative electrode plates. From the viewpoint of securing higher charge acceptability and PSOC life performance while suppressing the amount of overcharge to a low level, preferred is a negative electrode plate in which 50% or more (more preferably 80% or more or 90% or more) of the number of negative electrode plates included in the element satisfy the above condition. Among the negative electrode plates included in the element, a ratio of the negative electrode plates satisfying the above condition is 100% or less. All negative electrode plates included in the element may be a negative electrode plate satisfying the above condition.

When the lead-acid battery includes two or more cells, the elements of at least some cells may include the negative electrode plate satisfying the condition as described above. From the viewpoint of further suppressing the deterioration of the charge acceptability and securing a high effect of reducing the amount of overcharge, it is preferable that 50% or more (more preferably 80% or more or 90% or more) of the number of cells contained in the lead-acid battery include the element including the negative electrode plate satisfying the above condition. Among the cells included in the lead-acid battery, a ratio of the cells including the element including the negative electrode plate satisfying the above condition is 100% or less. It is preferable that all elements included in the lead-acid battery include the negative electrode plate satisfying the above condition.

Fig. 1 shows an appearance of an example of a lead-acid battery according to an embodiment of the present invention.

A lead-acid battery 1 includes a container 12 that houses an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 including a negative electrode terminal 16 and a positive electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is configured by stacking a plurality of negative electrode plates 2 and a plurality of positive electrode plates 3 with a separator 4 interposed therebetween. At this point, the bag-shaped separator 4 accommodating the negative electrode plate 2 is illustrated, but the form of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf 6, and the penetrating connection body 8 is connected to the positive electrode shelf 5. The negative pole 9 is connected to the negative electrode terminal 16 outside the lid 15. Each penetrating connection body 8 passes through a through-hole made in the partition 13 to connect the elements 11 of the adjacent cell chambers 14 in series.

The positive electrode shelf 5 is formed by welding the lug parts, provided on the upper parts of the respective positive electrode plates 3, to each other by a cast-on-strap method or a burning method. The negative electrode shelf 6 is also formed by welding the lug parts, provided on the upper parts of the respective negative electrode plates 2, to each other in accordance with the case of the positive electrode shelf 5.

The lid 15 of the lead-acid battery has a single structure (single lid), but is not limited to the illustrated examples. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

In the present specification, each of the amount of overcharge, the PSOC life performance, and the charge acceptability is evaluated by the following procedure. A test battery used for the evaluation has a rated voltage of 2 V/cell and a rated 5-hour rate capacity of 32 Ah.

### (a) Amount of overcharge

The amount of overcharge is evaluated using the test battery under the following conditions.

In order to set a more overcharge condition than the normal 4-10 min test specified JIS D 5301: 2019, a test of 1 minute of discharge and 10 minutes of charge (1-10 min test) is performed at 75°C ± 3°C (high temperature light load test). 1220 cycles of charge and discharge are repeated in the high temperature light load test. The amount of overcharge (amount of charge-discharge capacity) in each cycle up to 1220 cycles is summed and averaged to obtain the amount of overcharge (Ah) per cycle.
Discharge: 25 A, 1 minute
Charge: 2.47 V/cell, 25 A, 10 minutes
Water bath temperature: 75°C ± 3°C

### (b) PSOC life performance

Using the lead-acid battery, charge and discharge are performed in the pattern shown in Table 1. The number of cycles until the terminal voltage reaches 1.2 V per unit cell is used as an index of the PSOC life performance.

**[Table 1]**

| Step | Content | Test condition | | Air temperature (°C) |
|---|---|---|---|---|
| | | Current, voltage, or number of repetitions | Termination condition | |
| 1 | CC discharge | 32A | 59 seconds | |
| 2 | CC discharge | 300A | 1 second | |
| 3 | CV charge | 2.4 V/cell, maximum 50 A | 10 seconds | |
| 4 | CC discharge | 32A | 5 seconds | |
| 5 | Repeat steps 3 and 4 | 5 times | - | 40 |
| 6 | Repeat steps 1 to 5 | 50 times | - | |
| 7 | CV charge | 2.4 V/cell, maximum 50 A | 900 seconds | |
| 8 | Repeat steps 1 to 7 | 72 times | - | |
| 9 | Pause | 15 hours | - | |
| 10 | Return to step 1 | - | - | |

| | | | | |
|---|---|---|---|---|
| CC discharge: constant current discharge CV charge: constant voltage charge | | | | |

### (c) Charge acceptability

A 10 second electric quantity is measured using the test battery in the full charge state. Specifically, the test battery is discharged at 6.4 A for 30 minutes and left for 16 hours. Thereafter, the test battery is charged at a constant voltage of 2.42 V/cell while the upper limit of the current is 200 A, and an integrated electric quantity for 10 seconds (10 second electric quantity) at this time is measured. Both operations are performed in a water bath at 25°C ± 2°C. The integrated electric quantity for 10 seconds is used as an index for evaluation of the charge acceptability.

### [Examples]

Hereinafter, the present invention is specifically described on the basis of examples and comparative examples, but the present invention is not limited to the following examples.

### <<Lead-acid batteries E1 to E40, C1 to C4, and R1 to R4>>

### (1) Preparation of lead-acid battery

### (a) Preparation of negative electrode plate

A lead powder as a raw material, barium sulfate, carbon black, the first additives shown in Tables 2 to 4, and an organic expander shown in Tables 2 to 4 are mixed with an appropriate amount of a sulfuric acid aqueous solution to obtain a negative electrode paste. At this time, the components are mixed so that the contents of the first additive and the organic expander in the negative electrode material, which are determined by the procedure described above, are the values shown in Tables 2 to 4, the content of barium sulfate is 0.4% by mass, and the content of carbon black is 0.2% by mass. A mesh portion of an expanded grid made of a Pb-Ca-Sn alloy is filled with the negative electrode paste, which is then cured and dried to obtain a non-formed negative electrode plate.

As the organic expander shown in the table, the following components are used.
(e1) Lignin: Sodium ligninsulfonate (sulfur element content: 600 µmol/g, Mw: 5,500)
(e2) Condensate of bisphenol: condensate of a bisphenol compound including sulfonic acid group introduced with formaldehyde (sulfur element content: 4,000 µmol/g, Mw: 8,000)

### (b) Preparation of positive electrode plate

Lead powder as raw material is mixed with a sulfuric acid aqueous solution to obtain a positive electrode paste. A mesh portion of an expanded grid made of a Pb-Ca-Sn alloy is filled with the positive electrode paste, which is then cured and dried to obtain a non-formed positive electrode plate.

### (c) Preparation of lead-acid battery

A lead-acid battery has a rated voltage of 2 V/cell and a rated 5-hour rate capacity of 32 Ah. An element of the test battery includes seven positive electrode plates and seven negative electrode plates. The negative electrode plate is housed in a bag-shaped separator formed of a polyethylene microporous film, and alternately stacked with the positive electrode plate to form the element. The element is housed in a polypropylene container together with an electrolyte solution, and subjected to formation in the container to prepare a flooded-type lead-acid battery. The specific gravity of the electrolyte solution in the lead-acid battery in the full charge state at 20°C is 1.28. As the electrolyte solution, a sulfuric acid aqueous solution containing a metal sulfate corresponding to the first component shown in Tables 2 to 4 is used. An amount of the metal sulfate to be added is adjusted so that the concentration of each of the first components determined by the procedure described above is a value shown in Tables 2 to 4.

However, when the concentration of Na ions in the table is < 0.01 mol/L, Na ions are derived from sodium lignin sulfonate used for the negative electrode material, and when the concentration is < 0.002 mol/L, Na ions are derived from the first additive. In these cases, the electrolyte solution is prepared without adding sodium sulfate.

### (2) Evaluation

### (a) Amount of overcharge

The amount of overcharge (Ah) per cycle is determined by the procedure described above using the lead-acid battery. The amount of overcharge of each lead-acid battery is evaluated by a ratio (%) when the amount of overcharge (Ah) per cycle of a lead-acid battery C1 is 100.

### (b) PSOC life performance

The PSOC life performance is evaluated by the procedure described above using the lead-acid battery. The PSOC life performance of each lead-acid battery is expressed as a ratio (%) when the result of the lead-acid battery C1 is 100.

### (c) Charge acceptability

The charge acceptability is evaluated by the procedure described above using the lead-acid battery after full charge. In the charge acceptability of each lead-acid battery, the charge acceptability is evaluated by a ratio (%) when the integrated electric quantity of the lead-acid battery C1 is 100.

Tables 2 to 4 illustrate the results. The Mn of a polypropylene glycol and a polyethylene glycol is Mn determined by the procedure described above. In Table 2, the Mn of the esterified product is the Mn of the esterified product used for preparing the negative electrode material. The lead-acid batteries E1 to E40 are Examples, wherein E8 and E9 are not according to the invention. The lead-acid batteries C1 to C4 are Comparative Examples. The lead-acid batteries R1 to R4 are reference examples.

**[Table 2]**

| Battery No. | First additive | | Organic expander | | First component | | | Amount of overcharge [%] | Charge acceptability [%] | PSOC life performance [%] |
|---|---|---|---|---|---|---|---|---|---|---|
| | Type | Content [mass%] | Type | Content [mass%] | Li [mol/L] | Na [mol/L] | Al [mol/L] | | | |
| C1 | - | 0 | Lignin | 0.1 | 0 | <0.01 | 0 | 100 | 100 | 100 |
| C2 | - | 0 | Lignin | 0.1 | 0.05 | <0.01 | 0.05 | 100 | 112 | 154 |
| R1 | PPG(Mn 1500) | 0.05 | Lignin | 0.1 | 0 | <0.01 | 0 | 75 | 65 | 110 |
| E1 | PPG(Mn 1500) | 0.05 | Lignin | 0.1 | 0.05 | <0.01 | 0.05 | 65 | 121 | 184 |
| C3 | - | 0 | Condensate of bisphenol | 0.1 | 0 | <0.01 | 0 | 115 | 112 | 132 |
| C4 | - | 0 | Condensate of bisphenol | 0.1 | 0.05 | <0.01 | 0.05 | 116 | 115 | 162 |
| R2 | PPG(Mn 1500) | 0.05 | Condensate of bisphenol | 0.1 | 0 | <0.01 | 0 | 89 | 70 | 125 |
| E2 | PPG(Mn 1500) | 0.05 | Condensate of bisphenol | 0.1 | 0.05 | <0.01 | 0.05 | 78 | 136 | 201 |
| E3 | PPG(Mn 3000) | 0.05 | Condensate of bisphenol | 0.1 | 0.05 | <0.01 | 0.05 | 75 | 135 | 195 |
| E4 | PPG(Mn 8000) | 0.05 | Condensate of bisphenol | 0.1 | 0.05 | <0.01 | 0.05 | 80 | 132 | 198 |
| E5 | PEG(Mn 3000) | 0.05 | Condensate of bisphenol | 0.1 | 0.05 | <0.01 | 0.05 | 85 | 125 | 175 |
| E6 | Octyltrimethylammonium chloride | 0.05 | Condensate of bisphenol | 0.1 | 0.05 | <0.01 | 0.05 | 78 | 136 | 193 |
| E7 | Tetramethylammonium chloride | 0.05 | Condensate of bisphenol | 0.1 | 0.05 | <0.01 | 0.05 | 79 | 125 | 175 |
| E8 | Sodium dodecylbenzenesulfonate | 0.05 | Condensate of bisphenol | 0.1 | 0.05 | <0.01 | 0.05 | 82 | 110 | 150 |
| E9 | Sodium lauryl sulfate | 0.05 | Condensate of bisphenol | 0.1 | 0.05 | <0.01 | 0.05 | 84 | 112 | 146 |
| E10 | PEG oleate (Mn 500) | 0.05 | Condensate of bisphenol | 0.1 | 0.05 | <0.01 | 0.05 | 80 | 123 | 183 |
| E11 | POE sorbitan oleate (Mn 430) | 0.05 | Condensate of bisphenol | 0.1 | 0.05 | <0.01 | 0.05 | 78 | 126 | 176 |

| | | | |
|---|---|---|---|
| PPG: | polypropylene glycol | POE: | polyoxyethylene |
| PEG: | polyethylene glycol | | |

As shown in Table 2, even when an electrolyte solution containing the first component at a total concentration of 0.02 mol/L or more is used, if the electrolyte solution is combined with the negative electrode plate including the negative electrode material containing the organic expander but not containing the first additive, although the charge acceptability is improved, the amount of overcharge cannot be reduced (comparison between C1 and C2). Even when the lead-acid battery includes the negative electrode material containing the organic expander and the first additive, if the electrolyte solution does not contain the first component at a total concentration of 0.02 mol/L or more, although the amount of overcharge can be reduced, the charge acceptability is deteriorated (comparison between C1 and R1). In contrast to these results, when the negative electrode plate including the negative electrode material containing the organic expander and the first additive is combined with the electrolyte solution containing the first component at a total concentration of 0.02 mol/L or more, it is possible to greatly improve the charge acceptability while reducing the amount of overcharge (comparison of C1, C2 and R1 with E1). In E1, the PSOC life can also be greatly improved.

From C1, C2 and R1, when the electrolyte solution contains the first component at a total concentration of 0.02 mol/L or more, the charge acceptability is improved by 12%, the amount of overcharge is not changed, and the PSOC life performance is improved by 54%. Since the negative electrode material contains the first additive in addition to the organic expander, the charge acceptability is reduced by 35%, the amount of overcharge is reduced by 25%, and the PSOC life performance is improved by 10%. From these results, when the electrolyte solution containing the first component at a total concentration of 0.02 mol/L or more is combined with the negative electrode plate including the negative electrode material containing the organic expander and the first additive, the charge acceptability is expected to be 77% (= 100 + 12 - 35), the amount of overcharge is expected to be 75% (= 100 + 0 - 25), and the PSOC life performance is expected to be 164% (= 100 + 54 + 10). However, in practice, in E1, the charge acceptability is 121%, the amount of overcharge is 65%, and the PSOC life performance is 184%. Such a result of E1 is much better than expected from C1, C2 and R1, and it is found that a synergistic effect is obtained by the combination of the electrolyte solution and the negative electrode plate.

A relationship between C3, C4 and R2, and E2 is the same as described above, and even in the case of the synthetic organic expander, a synergistic effect can be obtained in both of the improvement of the charge acceptability and the PSOC life performance and the reduction of the amount of overcharge.

Not only when polypropylene glycol is used as the first additive, but also when polyethylene glycol, an esterified product, or a surfactant is used, the same or similar effect as the result of E2 is obtained (E5 to E11).

From the viewpoint of easily securing higher charge acceptability and PSOC life performance and a lower amount of overcharge, the first additive preferably does not contain a sulfur element, and a cationic surfactant is preferably used (comparison between E8 to E9 and E1 to E7). From the same viewpoint, it is preferable to use the first additive containing the compound having the repeating structure of the oxypropylene unit, and it is more preferable that such a compound does not contain the repeating structure of the oxyethylene unit (comparison between E5 and E2 to E4).

From the viewpoint of easily securing higher charge acceptability and PSOC life performance, at least one of the hydrophobic groups of the surfactant is preferably a long-chain aliphatic hydrocarbon group having 8 or more carbon atoms (comparison between E6 and E7).

**[Table 3]**

| Battery No. | First additive | | Organic expander | | First component | | | Amount of overcharge [%] | Charge acceptability [%] | PSOC life performance [%] |
|---|---|---|---|---|---|---|---|---|---|---|
| | Type | Content [mass%] | Type | Content [mass%] | Li [mol/L] | Na [mol/L] | Al [mol/L] | | | |
| C1 | - | 0 | Lignin | 0.1 | 0 | <0.01 | 0 | 100 | 100 | 100 |
| E12 | PPG | 0.001 | Condensate of bisphenol | 0.1 | 0.05 | <0.01 | 0.05 | 95 | 118 | 165 |
| E13 | PPG | 0.01 | Condensate of bisphenol | 0.1 | 0.05 | <0.01 | 0.05 | 89 | 125 | 171 |
| E2 | PPG | 0.05 | Condensate of bisphenol | 0.1 | 0.05 | <0.01 | 0.05 | 78 | 136 | 201 |
| E14 | PPG | 0.5 | Condensate of bisphenol | 0.1 | 0.05 | <0.01 | 0.05 | 73 | 111 | 165 |

| | | | | | | | | | | |
|---|---|---|---|---|---|---|---|---|---|---|
| PPG: polypropylene glycol (Mn 1500) | | | | | | | | | | |

As shown in Table 3, even when the content of the first additive in the negative electrode material is changed, an excellent effect can be obtained. From the viewpoint of obtaining a higher effect, the content of the first additive is preferably 10 ppm or more (or 50 ppm or more) and 10,000 ppm or less, and may be 100 ppm or more and 8,000 ppm or less.

**[Table 4]**

| Battery No. | First additive | | Organic expander | | First component | | | Amount of overcharge [%] | Charge acceptability [%] | PSOC life performance [%] |
|---|---|---|---|---|---|---|---|---|---|---|
| | Type | Content [mass%] | Type | Content [mass%] | Li [mol/L] | Na [mol/L] | Al [mol/L] | | | |
| C1 | - | 0 | Lignin | 0.1 | 0 | <0.01 | 0 | 100 | 100 | 100 |
| C3 | - | 0 | Condensate of bisphenol | 0.1 | 0 | <0.01 | 0 | 115 | 112 | 132 |
| C4 | - | 0 | Condensate of bisphenol | 0.1 | 0.05 | <0.01 | 0.05 | 116 | 115 | 162 |
| R2 | PPG | 0.05 | Condensate of bisphenol | 0.1 | 0 | <0.01 | 0 | 89 | 70 | 125 |
| R3 | PPG | 0.05 | Condensate of bisphenol | 0.1 | 0.01 | <0.01 | 0 | 88 | 83 | 130 |
| E15 | PPG | 0.05 | Condensate of bisphenol | 0.1 | 0.02 | <0.01 | 0 | 80 | 124 | 178 |
| E16 | PPG | 0.05 | Condensate of bisphenol | 0.1 | 0.05 | <0.01 | 0 | 82 | 122 | 180 |
| E17 | PPG | 0.05 | Condensate of bisphenol | 0.1 | 0.1 | <0.01 | 0 | 81 | 126 | 181 |
| E18 | PPG | 0.05 | Condensate of bisphenol | 0.1 | 0.2 | <0.01 | 0 | 83 | 123 | 178 |
| E19 | PPG | 0.05 | Condensate of bisphenol | 0.1 | 0.3 | <0.01 | 0 | 89 | 115 | 142 |
| E20 | PPG | 0.05 | Condensate of bisphenol | 0.1 | 0.02 | <0.01 | 0.02 | 75 | 135 | 195 |
| E21 | PPG | 0.05 | Condensate of bisphenol | 0.1 | 0.05 | <0.01 | 0.02 | 78 | 136 | 193 |
| E22 | PPG | 0.05 | Condensate of bisphenol | 0.1 | 0.1 | <0.01 | 0.02 | 79 | 132 | 195 |
| E23 | PPG | 0.05 | Condensate of bisphenol | 0.1 | 0.2 | <0.01 | 0.02 | 75 | 130 | 192 |
| E24 | PPG | 0.05 | Condensate of bisphenol | 0.1 | 0.02 | <0.01 | 0.05 | 72 | 134 | 197 |
| E2 | PPG | 0.05 | Condensate of bisphenol | 0.1 | 0.05 | <0.01 | 0.05 | 78 | 136 | 201 |
| E25 | PPG | 0.05 | Condensate of bisphenol | 0.1 | 0.1 | <0.01 | 0.05 | 72 | 133 | 197 |
| E26 | PPG | 0.05 | Condensate of bisphenol | 0.1 | 0.2 | <0.01 | 0.05 | 71 | 132 | 195 |
| E27 | PPG | 0.05 | Condensate of bisphenol | 0.1 | 0.02 | <0.01 | 0.1 | 79 | 135 | 198 |
| E28 | PPG | 0.05 | Condensate of bisphenol | 0.1 | 0.05 | <0.01 | 0.1 | 75 | 129 | 194 |
| E29 | PPG | 0.05 | Condensate of bisphenol | 0.1 | 0.1 | <0.01 | 0.1 | 76 | 137 | 192 |
| E30 | PPG | 0.05 | Condensate of bisphenol | 0.1 | 0.2 | <0.01 | 0.1 | 78 | 135 | 193 |
| E31 | PPG | 0.05 | Condensate of bisphenol | 0.1 | 0.02 | <0.01 | 0.2 | 77 | 133 | 196 |
| E32 | PPG | 0.05 | Condensate of bisphenol | 0.1 | 0.05 | <0.01 | 0.2 | 72 | 134 | 200 |
| E33 | PPG | 0.05 | Condensate of bisphenol | 0.1 | 0.1 | <0.01 | 0.2 | 75 | 135 | 199 |
| E34 | PPG | 0.05 | Condensate of bisphenol | 0.1 | 0.2 | <0.01 | 0.2 | 73 | 133 | 196 |
| E15 | PPG | 0.05 | Condensate of bisphenol | 0.1 | 0.02 | <0.01 | 0 | 80 | 124 | 178 |
| E17 | PPG | 0.05 | Condensate of bisphenol | 0.1 | 0.1 | <0.01 | 0 | 81 | 126 | 181 |
| E18 | PPG | 0.05 | Condensate of bisphenol | 0.1 | 0.2 | <0.01 | 0 | 83 | 123 | 178 |
| E20 | PPG | 0.05 | Condensate of bisphenol | 0.1 | 0.02 | <0.01 | 0.02 | 75 | 135 | 195 |
| E2 | PPG | 0.05 | Condensate of bisphenol | 0.1 | 0.05 | <0.01 | 0.05 | 78 | 136 | 201 |
| R4 | PPG | 0.05 | Condensate of bisphenol | 0.1 | 0 | <0.01 | 0.01 | 89 | 85 | 127 |
| E35 | PPG | 0.05 | Condensate of bisphenol | 0.1 | 0 | <0.01 | 0.3 | 91 | 112 | 135 |
| E36 | PPG | 0.05 | Condensate of bisphenol | 0.1 | 0 | 0.02 | 0 | 77 | 124 | 172 |
| E37 | PPG | 0.05 | Condensate of bisphenol | 0.1 | 0 | 0.1 | 0 | 72 | 122 | 171 |
| E38 | PPG | 0.05 | Condensate of bisphenol | 0.1 | 0 | 0.2 | 0 | 73 | 120 | 169 |
| E39 | PPG | 0.05 | Condensate of bisphenol | 0.1 | 0 | 0.02 | 0.02 | 70 | 124 | 195 |
| E40 | PPG | 0.05 | Condensate of bisphenol | 0.1 | 0 | 0.05 | 0.05 | 71 | 129 | 198 |

| | | | | | | | | | | |
|---|---|---|---|---|---|---|---|---|---|---|
| PPG: polypropylene glycol (Mn 1500) | | | | | | | | | | |

As shown in Table 4, when the total concentration of the first component in the electrolyte solution is less than 0.02 mol/L, the effect of improving the charge acceptability is hardly obtained (R3 and R4). On the other hand, when the total concentration of the first component in the electrolyte solution is 0.02 mol/L or more, the charge acceptability and the PSOC life performance are significantly improved (comparison of R3 and R4 with E2 and E15 to E40). From the viewpoint of further easily reducing the amount of overcharge, the concentration of each of the first components in the electrolyte solution is 0.35 mol/L or less, preferably 0.3 mol/L or less, and more preferably 0.25 mol/L or less or 0.2 mol/L or less.

From the viewpoint of securing higher charge acceptability and PSOC life performance, the first component preferably contains at least one of Li ions and Na ions and Al ions (comparison of E15 to E18 with E2 and E20 to E34, comparison of E36 to E38 with E39 and E40). In this case, the amount of overcharge can be suppressed to be lower level.

From the viewpoint of securing higher charge acceptability, the first component preferably contains at least Li ions and Al ions (comparison of E 15, E17, E18, E20 and E2 with E36 to E40).

### INDUSTRIAL APPLICABILITY

The lead-acid battery according to one aspect of the present invention is suitable for use in an idling stop vehicle as, for example, a lead-acid battery for IS that is charged and discharged under PSOC conditions. The lead-acid battery can be suitably used as, for example, a power source for starting a vehicle (automobiles, motorcycles, etc.), and an industrial energy storage apparatus (for example, a power source of an electric vehicle (such as forklift) or the like). Note that these are merely illustrative, and the application of the lead-acid battery is not limited thereto.

### DESCRIPTION OF REFERENCE SIGNS

1: lead-acid battery
2: negative electrode plate
3: positive electrode plate
4: separator
5: positive electrode shelf
6: negative electrode shelf
7: positive pole
8: penetrating connection body
9: negative pole
11: element
12: container
13: partition
14: cell chamber
15: lid
16: negative electrode terminal
17: positive electrode terminal
18: vent plug

## Claims

1. A lead-acid battery comprising at least one cell including an element and an electrolyte solution,
wherein
the element includes a positive electrode plate, a negative electrode plate, and a separator interposed between the negative electrode plate and the positive electrode plate,
the negative electrode plate includes a negative electrode material,
the negative electrode material contains an organic expander and at least one additive selected from the group consisting of a cationic surfactant and a polymer compound having a repeating structure of an oxy C₂₋₄ alkylene unit,
the electrolyte solution contains metal ions,
the metal ion contains at least one component selected from the group consisting of a lithium ion, a sodium ion, and an aluminum ion,
a total concentration of the component in the electrolyte solution is 0.02 mol/L or more, and
the concentration of each of the components in the electrolyte solution is 0.35 mol/L or less.

2. The lead-acid battery according to claim 1, wherein the concentration of each of the components is 0.25 mol/L or less.

3. The lead-acid battery according to claim 1 or 2, wherein the component contains at least one of a lithium ion and a sodium ion, as well as an aluminum ion.

4. The lead-acid battery according to any one of claims 1 to 3, wherein the component contains at least a lithium ion and an aluminum ion.

5. The lead-acid battery according to any one of claims 1 to 4, wherein the additive contains a compound having a repeating structure of an oxypropylene unit.

6. The lead-acid battery according to claim 5, wherein a number average molecular weight of the compound is 1,000 or more and 10,000 or less.

7. The lead-acid battery according to claim 5 or 6, wherein the compound does not contain a repeating structure of an oxyethylene unit.

8. The lead-acid battery according to any one of claims 1 to 7, wherein the additive does not contain a sulfur element.

9. The lead-acid battery according to claim 1, wherein the cationic surfactant contains a quaternary ammonium salt.

10. The lead-acid battery according to any one of claims 1 to 9, wherein
the negative electrode material contains a carbonaceous material,
the additive has at least one or more hydrophobic groups and a hydrophilic group, and
at least one of the hydrophobic groups is a long-chain aliphatic hydrocarbon group having 8 or more carbon atoms.

11. The lead-acid battery according to any one of claims 1 to 10, wherein the organic expander contains a condensate of a bisarene compound.

12. The lead-acid battery according to any one of claims 1 to 11, wherein a content of the additive in the negative electrode material is 50 ppm or more on a mass basis.

13. The lead-acid battery according to any one of claims 1 to 12, wherein the content of the additive in the negative electrode material is 10,000 ppm or less on a mass basis.

14. The lead-acid battery according to any one of claims 1 to 13, wherein the concentration of each of the components is 0.01 mol/L or more, and/or wherein the total concentration of the component is 0.7 mol/L or less, and/or wherein the total concentration of the component is 0.5 mol/L or less.

## Patentansprüche

1. Blei-Säure-Batterie, umfassend mindestens eine Zelle mit einem Element und eine Elektrolytlösung,
wobei
das Element eine positive Elektrodenplatte, eine negative Elektrodenplatte und einen Separator aufweist, der zwischen der negativen Elektrodenplatte und der positiven Elektrodenplatte angeordnet ist;
die negative Elektrodenplatte ein negatives Elektrodenmaterial aufweist,
das negative Elektrodenmaterial einen organischen Expander enthält und mindestens ein Additiv, das aus der Gruppe ausgewählt ist, die aus einem kationischen Tensid und einer Polymerverbindung besteht, die eine sich wiederholende Struktur aus einer Oxy-C₂₋₄-Alkyleneinheit aufweist,
die Elektrolytlösung Metallionen enthält,
das Metallion mindestens einen Bestandteil enthält, der aus der Gruppe ausgewählt ist, die aus einem Lithiumion, einem Natriumion und einem Aluminiumion besteht,
eine Gesamtkonzentration des Bestandteils in der Elektrolytlösung größer oder gleich 0,02 mol/l ist und
die Konzentration von jedem der Bestandteile in der Elektrolytlösung kleiner oder gleich 0,35 mol/l ist.

2. Blei-Säure-Batterie nach Anspruch 1, wobei die Konzentration von jedem der Bestandteile kleiner oder gleich 0,25 mol/l ist.

3. Blei-Säure-Batterie nach Anspruch 1 oder 2, wobei der Bestandteil mindestens eines aus einem Lithiumion und einem Natriumion sowie ein Aluminiumion enthält.

4. Blei-Säure-Batterie nach einem der Ansprüche 1 bis 3, wobei der Bestandteil mindestens eines aus einem Lithiumion und einem Aluminiumion enthält.

5. Blei-Säure-Batterie nach einem der Ansprüche 1 bis 4, wobei das Additiv eine Verbindung mit einer sich wiederholenden Struktur aus einer Oxypropyleneinheit enthält.

6. Blei-Säure-Batterie nach Anspruch 5, wobei eine zahlenmittlere Molekülmasse der Verbindung größer oder gleich 1.000 und kleiner oder gleich 10.000 ist.

7. Blei-Säure-Batterie nach Anspruch 5 oder 6, wobei die Verbindung keine sich wiederholende Struktur aus einer Oxyethyleneinheit enthält.

8. Blei-Säure-Batterie nach einem der Ansprüche 1 bis 7, wobei das Additiv kein Schwefelelement enthält.

9. Blei-Säure-Batterie nach Anspruch 1, wobei das kationische Tensid ein quartäres Ammoniumsalz enthält.

10. Blei-Säure-Batterie nach einem der Ansprüche 1 bis 9, wobei
das negative Elektrodenmaterial ein kohlenstoffhaltiges Material enthält,
das Additiv mindestens eine oder mehrere hydrophobe Gruppen und eine hydrophile Gruppe aufweist und
mindestens eine der hydrophoben Gruppen eine langkettige aliphatische Kohlenwasserstoffgruppe mit 8 oder mehr Kohlenstoffatomen ist.

11. Blei-Säure-Batterie nach einem der Ansprüche 1 bis 10, wobei der organische Expander ein Kondensat einer Bis(aren)verbindung enthält.

12. Blei-Säure-Batterie nach einem der Ansprüche 1 bis 11, wobei ein Gehalt des Additivs im negativen Elektrodenmaterial massebezogen größer oder gleich 50 ppm ist.

13. Blei-Säure-Batterie nach einem der Ansprüche 1 bis 12, wobei der Gehalt des Additivs im negativen Elektrodenmaterial massebezogen kleiner oder gleich 10.000 ppm ist.

14. Blei-Säure-Batterie nach einem der Ansprüche 1 bis 13, wobei die Konzentration von jedem der Bestandteile größer oder gleich 0,01 mol/l ist und/oder wobei die Gesamtkonzentration des Bestandteils kleiner oder gleich 0,7 mol/l ist und/oder wobei die Gesamtkonzentration des Bestandteils kleiner oder gleich 0,5 mol/l ist.

## Revendications

1. Batterie au plomb acide comprenant au moins une cellule comportant un élément et une solution d'électrolyte,
dans laquelle
l'élément comporte une plaque d'électrode positive, une plaque d'électrode négative et un séparateur disposé entre la plaque d'électrode négative et la plaque d'électrode positive,
la plaque d'électrode négative comporte un matériau d'électrode négative,
le matériau d'électrode négative contient un agent anti-retrait organique et au moins un additif choisi dans le groupe constitué d'un tensioactif cationique et d'un composé polymère ayant une structure de répétition à base d'une unité oxy alcylène en C₂₋₄,
la solution d'électrolyte contient des ions métalliques,
l'ion métallique contient au moins un composant choisi dans le groupe constitué d'un ion lithium, d'un ion sodium et d'un ion aluminium,
une concentration totale du composant dans la solution d'électrolyte est égale ou supérieure à 0,02 mol/l, et
la concentration de chacun des composants dans la solution d'électrolyte est inférieure ou égale à 0,35 mol/l.

2. Batterie au plomb acide selon la revendication 1, dans laquelle la concentration des composants est inférieure ou égale à 0,25 mol/l.

3. Batterie au plomb acide selon la revendication 1 ou la revendication 2, dans laquelle le composant contient au moins un parmi un ion lithium et un ion sodium, ainsi qu'un ion aluminium.

4. Batterie au plomb acide selon l'une quelconque des revendication 1 à 3, dans laquelle le composant contient au moins un ion lithium et un ion aluminium.

5. Batterie au plomb acide selon l'une quelconque des revendication 1 à 4, dans laquelle l'additif contient un composé ayant une structure de répétition à base d'une unité oxypolypropylène.

6. Batterie au plomb acide selon la revendication 5, dans laquelle un poids moléculaire moyen en nombre du composé est égal ou supérieur à 1 000 et inférieur ou égal à 10 000.

7. Batterie au plomb acide selon la revendication 5 ou la revendication 6, dans laquelle le composé ne contient pas de structure de répétition à base d'une unité oxyéthylène.

8. Batterie au plomb acide selon l'une quelconque des revendication 1 à 7, dans laquelle l'additif ne contient pas d'élément soufre.

9. Batterie au plomb acide selon la revendication 1, dans laquelle le tensioactif cationique contient un sel d'ammonium quaternaire.

10. Batterie au plomb acide selon l'une quelconque des revendication 1 à 9, dans laquelle
le matériau d'électrode négative contient un matériau carboné,
l'additif a au moins un ou plusieurs groupements hydrophobes et un groupement hydrophile, et
au moins un des groupements hydrophobes est un groupement hydrocarboné aliphatique à longue chaine ayant 8 atomes de carbone ou plus.

11. Batterie au plomb acide selon l'une quelconque des revendication 1 à 10, dans laquelle l'agent anti-retrait organique contient un condensat de composé bis(arène).

12. Batterie au plomb acide selon l'une quelconque des revendication 1 à 11, dans laquelle une teneur de l'additif dans le matériau d'électrode négative est égale ou supérieure à 50 ppm sur une base massique.

13. Batterie au plomb acide selon l'une quelconque des revendication 1 à 12, dans laquelle la teneur de l'additif dans le matériau d'électrode négative est inférieure ou égale à 10 000 ppm sur une base massique.

14. Batterie au plomb acide selon l'une quelconque des revendication 1 à 13, dans laquelle la concentration de chacun des composants est égale ou supérieure à 0,01 mol/l, et/ou dans laquelle la concentration totale du composant est inférieure ou égale à 0,7 mol/l, et/ou dans laquelle la concentration totale du composant est inférieure ou égale à 0,5 mol/l.
